# EUROPEAN PATENT APPLICATION

(11) **EP 2 397 199 A1**
(43) Date of publication of application: **21.12.2011**
(21) Application number: 11169595.3
(22) Date of filing: 10.06.2011
(51) Int. Cl.: A63F 13/10, A63F 13/12

(54) **Computer system and program**

(30) Priority: 16.06.2010 JP 2010137126
(71) Applicant: Bandai Co., Ltd., Tokyo (JP); NAMCO BANDAI Games Inc., Shinagawa-ku Tokyo 140-8590 (JP)
(72) Inventor: Nakamura,Taira, Taito-ku, Tokyo (JP); Sarudate, Osamu, Taito-ku, Tokyo (JP); Masui, Daisuke, Shinagawa-ku, Tokyo (JP); Oikawa, Tsukasa, Shinagawa-ku, Tokyo (JP)
(74) Representative: Hopkin, Tobias J.B.

(57) **Abstract**

If a "draft" regulation is defined for each of leagues, all players on original teams owned by all game players are tentatively pooled. One of the players in the pool is selected for each of the teams owned by the game players in turn, and special teams used for only the current league are created.

## Description

### 1. Field of the Invention

The present invention relates to a computer system for a gamer playing a game against another gamer.

### 2. Description of the Related Art

One type of team-based sports game for a gamer to play against others is a simulation game in which the gamer acts as the owner of a team, scouts players, creates his/her own team, and observes the team automatically playing against a team of another gamer. For example, such a baseball game is described in Online game SEGA Corporation "Let's make a professional baseball team ONLINE 2", [online], started on May 27, 2008, <URL: http://www.yakyutsuku-online.com/>.

The gamer selects a team lineup from the players of the team (e.g., a lineup of 11 players). Thereafter, the gamer enjoys playing a game in order to find out how strong the team created by him/her is. During a game, in addition to the action of each players and substitution of a player, a tactic to be taken is automatically determined. Accordingly, this is a chance for the gamer to show his/her abilities by how well he/she predicts the progress of the game and selects team members before the game starts.

In some games of such a genre, gamers scout players by collecting trading cards. A trading card corresponds to a player playable in a sports game. By registering the right to use a trading card with a predetermined website, a gamer can register the player so as to use the player on his/her own team. Such a game is described in, for example, the BANDAI online game "Professional Baseball Owners' League" beta version started on March 9, 2010, Selling of cards started on March 20, 2010, [online], <URL: http://ownersleague.jp/>.

In trading card collection-based games (for example, the game described in the BANDAI online game "Professional Baseball Owners' League" beta version), the speed at which cards are collected differs from gamer to gamer. That is, the speeds at which cards are collected are not the same for all gamers. Accordingly, even when friends started a game at the same time, the types of card and the number of cards frequently differ from friend to friend. Therefore, the number of players under a gamer's control differ from gamer to gamer, and a one-sided game frequently occurs. As a result, although friends want to play against each other and enjoy the game, all of them cannot equally enjoy the game due to the occurrence of such a one-side game.

Note that such a situation occurs for not only real trading cards sold in real shops but virtual electronic cards. In addition, such a situation occurs for not only trading cards but, for example, small figures.

Accordingly, it is an aim of the present invention to provide a computer system and a program that allow all gamers to equally enjoy playing a game against each other regardless of the number of, and ability of, collected characters (trading cards) of the gamers.

In particular, it is an aim of the invention to provide a system that provides more competitive games using the collected characters of the gamers without creating a requirement for significant processing capability that may not be available without incurring significant additional costs.

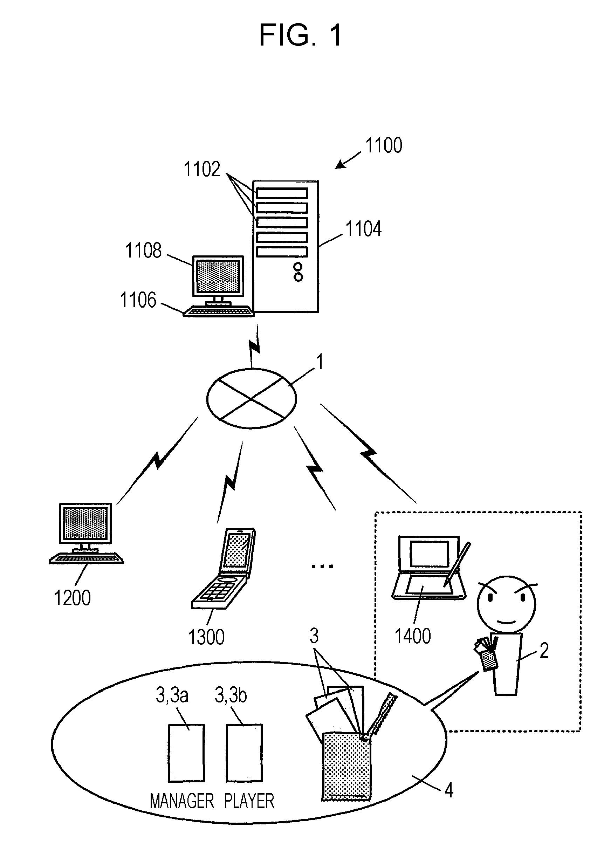

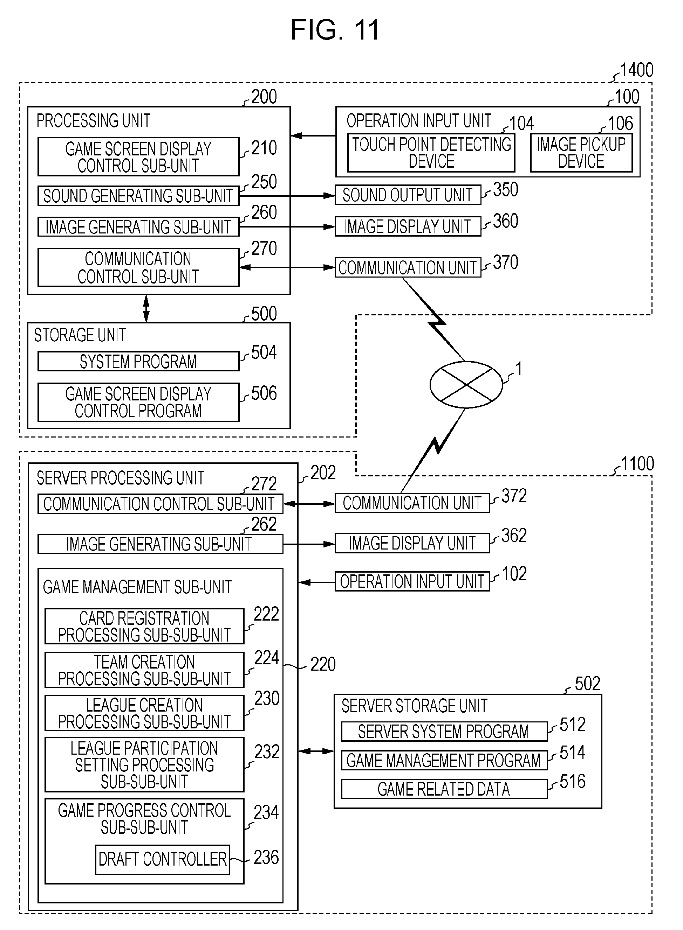

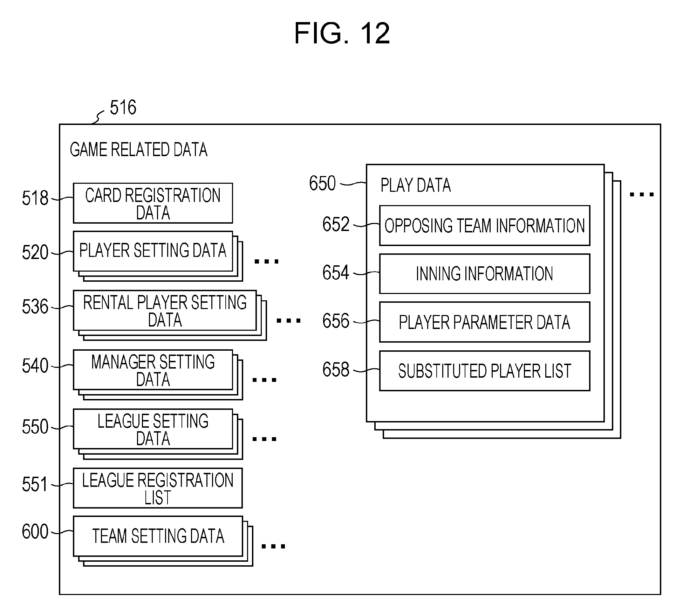

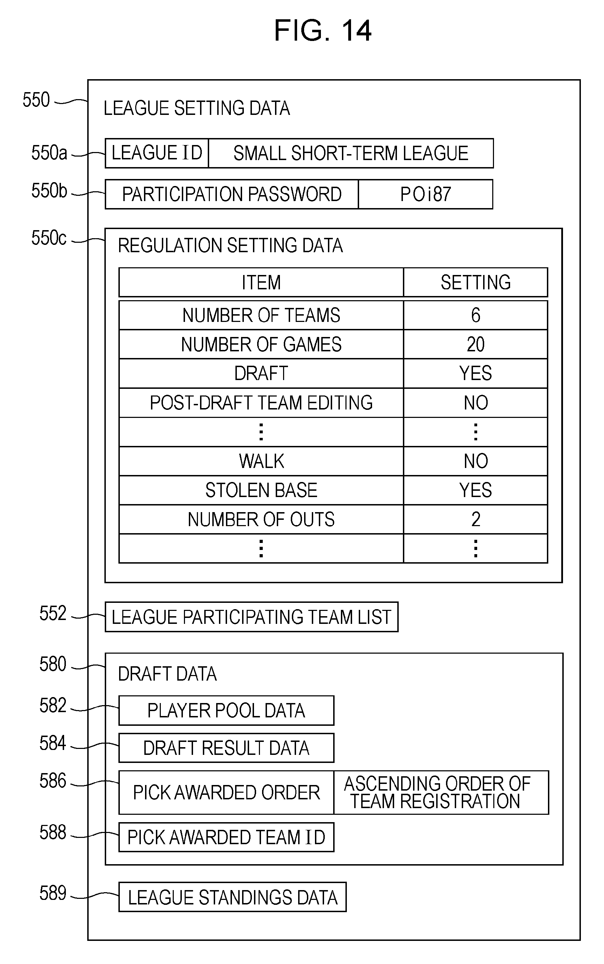

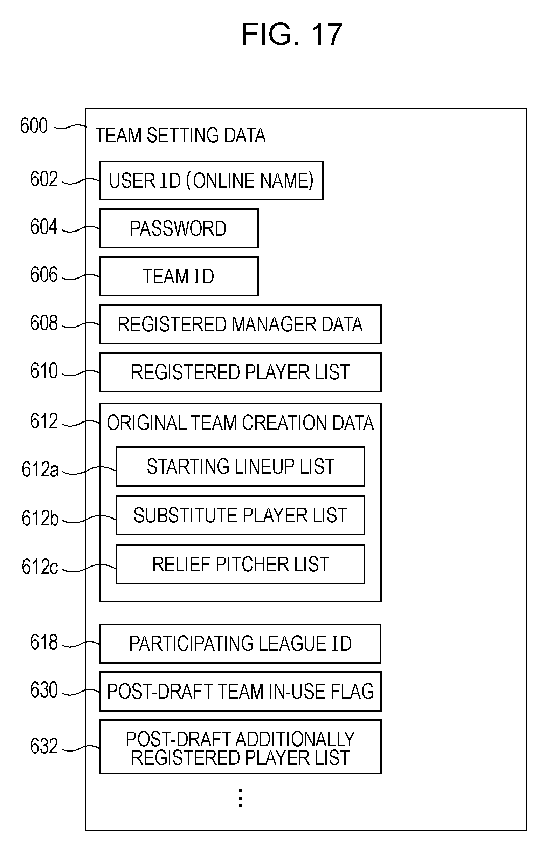

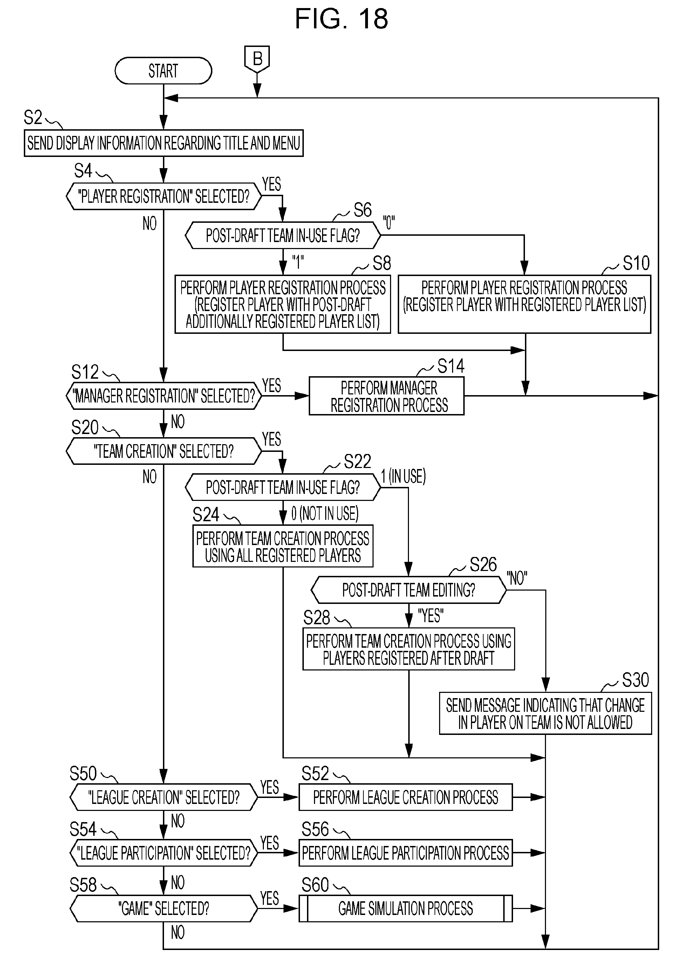

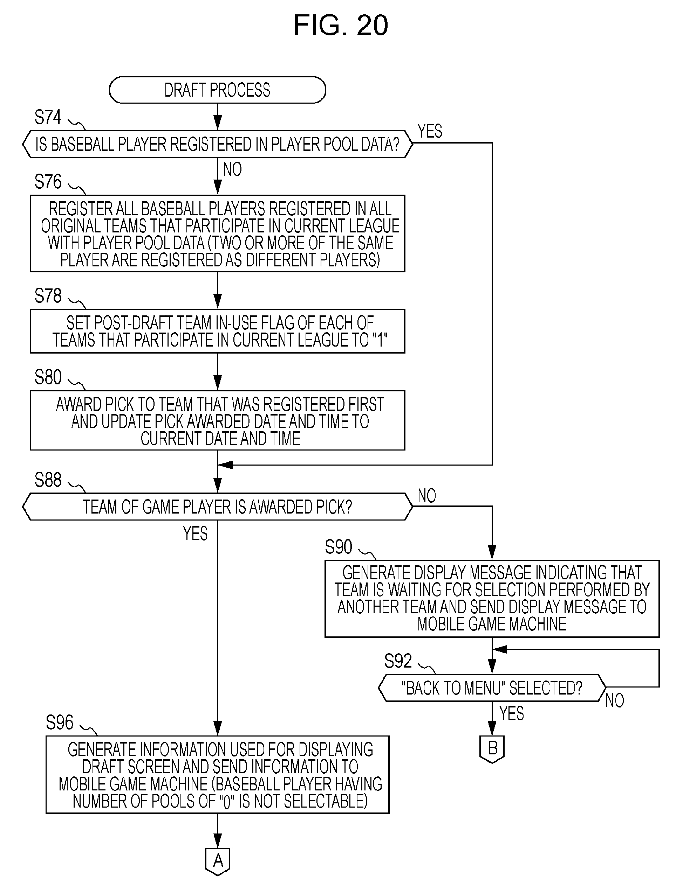

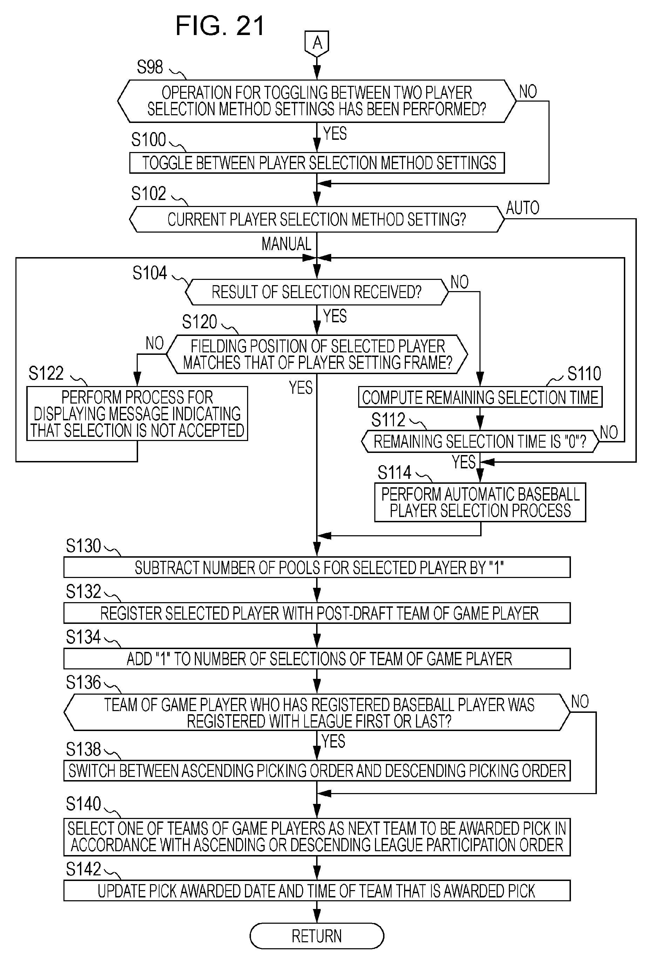

According to an embodiment of the present invention, a computer system for playing a game in which teams owned by game players and including a plurality of characters play against each other is provided. The computer system includes ID storage means (e.g., a server storage unit 502 shown in Fig. 11 and game related data 516 and card registration data 518 shown in Fig. 12) for storing object lDs representing lDs uniquely assigned to objects (e.g., trading cards 3 shown in Fig. 1) corresponding to the characters, registration receiving means (e.g., the server storage unit 502, a game management sub-unit 220, a card registration processing sub-sub-unit 222, and a communication unit 372 shown in Fig. 11 and steps S4 to S10 shown in Fig. 18) for receiving a request for registering an object ID for use in a game in response to an input operation performed on a game player terminal, registration managing means (e.g., a server processing unit 202, a game management sub-unit 220, and a card registration processing sub-sub-unit 222 shown in Fig. 11 and step S8 or S10 shown in Fig. 18) for managing the presence/absence of registration of the object lDs for use so that registration is not allowed if an object ID received from the registration receiving means has already been registered and the registration is allowed if an object ID received from the registration receiving means has not yet been registered, registration configuring means (e.g., the server processing unit 202, the game management sub-unit 220, and the card registration processing sub-sub-unit 222 shown in Fig. 11, a registered player list 610 shown in Fig. 17, and step S8 or S10 shown in Fig. 18) for causing storage means (e.g., a server storage unit 502 shown in Fig. 11, game related data 516 shown in Fig. 12, and original team creation data 612 shown in Fig. 17) for storing characters that form each of the teams of the game players to store, as a character of the team, a character corresponding to an object ID registered by the registration managing means, pooling means (e.g., the server processing unit 202, the game management sub-unit 220, and a draft controller 236 shown in Fig. 11, league setting data 550 and player pool data 582 shown in Fig. 14, and step S76 shown in Fig. 20) for tentatively pooling the characters that form all of the teams stored in the storage means, team formation updating means (e.g., the server processing unit 202, the game management sub-unit 220, and the draft controller 236 shown in Fig. 11 and steps S104 to S132 shown in Fig. 21) for re-creating each of the teams of the game players by selecting each one of the characters from among the characters pooled by the pooling means in turn, and progress control means for updating ability parameters of the characters of the new teams of the game players to predetermined ability values set for a character having an object ID that does not require registration for use (e.g., a rental player in the embodiment) and controlling progress of a game using the new teams of the game players.

According to another embodiment of the present invention, a program for causing a computer to play a game in which teams owned by game players and including a plurality of characters play against each other is provided. The program includes program code for causing the computer to function as ID storage means for storing object lDs representing lDs uniquely assigned to objects corresponding to the characters, registration receiving means for receiving a request for registering an object ID for use in a game in response to an input operation performed on a game player terminal, registration managing means for managing the presence/absence of registration of the object IDs for use so that registration is not allowed if an object ID received from the registration receiving means has already been registered and the registration is allowed if an object ID received from the registration receiving means has not yet been registered, registration configuring means for causing storage means for storing characters that form each of the teams of the game players to store, as a character of the team, a character corresponding to an object ID registered by the registration managing means, pooling means for tentatively pooling the characters that form all of the teams stored in the storage means, team formation updating means for re-creating each of the teams of the game players by selecting each one of the characters from among the characters pooled by the pooling means in turn, and progress control means for updating ability parameters of the characters of the new teams of the game players to predetermined ability values set for a character having an object ID that does not require registration for use and controlling progress of a game using the new teams of the game players.

As used herein, the term "object" refers to a real item, such as a trading card, a bottle cap, a character figure, or a writing material, and an electronic virtual item.

According to the above-described embodiments of the present invention, an object collected by a game player is not double registered for use and, therefore, the object can be unique. In addition, all of the characters of the original teams owned by the game players can be pooled, and new teams can be created for the game players using the pooled characters. That is, even when the types of collected trading card and the number of collected trading cards differ from game player to game player, all the characters collected by the game players can be used by all the game players before a game starts. Accordingly, all of the game players can equally enjoy a game regardless of the types and the number of trading cards collected by each of the game players.

Additionally, by updating ability parameters of the characters of the new teams to predetermined ability values set for a character having an object ID that does not require registration for use, the teams can be created from the characters of the players in a way that avoids one-sided games. This improves player enjoyment by creating competitive matches without high additional computer processing overhead.

The team formation updating means can include a pick awarding means (e.g., the server processing unit 202, the game management sub-unit 220, and the draft controller 236 shown in Fig. 11 and steps S136 to S140 shown in Fig. 21) for sequentially awarding a pick of one of the characters to the teams of the game players in each round while changing a picking order for each round and selecting means (e.g., the server processing unit 202, the game management sub-unit 220, and the draft controller 236 shown in Fig. 11 and steps S104 ("YES") to S120 ("YES") to S132 shown in Fig. 21) for selecting one of the characters in accordance with an instruction to select the character received from the game player who owns the team that is awarded the pick by the pick awarding means.

Such a configuration can provide an advantage that is the same as that of the embodiments. In addition, by sequentially awarding a pick of one of the characters to the teams of the game players in each round while changing a picking order for each round, a particular game player does not have an advantage over the other game players in the pick.

The computer system can further include communicating means (e.g., a communication unit 372 shown in Fig. 11) for communicating with each of game player terminals of the game players. The selecting means selects one of the characters in accordance with a selection instruction signal transmitted from the corresponding game player terminal, and if the selecting means does not receive a selection instruction signal within a predetermined time limit, the selecting means automatically select one of the characters for the pick.

The configuration is designed so that each of the game players instructs the computer system to select one of the characters using his/her own terminal. Accordingly, all the game players cannot always send their instructions at the same time. When the configuration is designed so that only manual selection is allowed and if one of the game players forgets to send his/her instruction, the selection does not finish for ever. However, the above-described configuration can provide an advantage that is the same as that of the embodiments. In addition, if selection is not made within a predetermined time limit from the time the selection right was awarded to the game player, one of the characters is automatically selected on behalf of the game player. In this way, a game can progress smoothly.

The computer system can further include automatic selection instruction receiving means (e.g., the communication unit 372, the game management sub-unit 220, and the draft controller 236 shown in Fig. 11 and step S98 shown in Fig. 21) for receiving an automatic selection instruction signal from the game player terminal. The selecting means automatically selects a character for the game player from which the automatic selection instruction receiving means received the automatic selection instruction signal.

The above-described configuration can provide an advantage that is the same as that of the previously described configuration. In addition, the game player can select one of manual character selection and automatic character selection.

Each of the characters can have attributes, and a condition for the number of characters assignable to one team of a game player can be defined for each of the attributes. The selecting means can include selection disabling means (e.g., the game management sub-unit 220 and the draft controller 236 shown in Fig. 11 and steps S120 to S122 shown in Fig. 21) for disabling selection of a character that does not satisfy the condition for the number of characters.

The above-described configuration can provide an advantage that is the same as one of the previously described configurations. In addition, the configuration supports the game player to select one of the characters.

If the same character is assigned to a plurality of teams of the game players, the pooling means can pool the character as different characters.

The above-described configuration can provide an advantage that is the same as one of the previously described configurations. In addition, even when the same character is assigned to a plurality of original teams of the game players, the character can be considered as different characters. Therefore, the number of characters can be sufficient when the characters are pooled. Furthermore, all the game players can equally supply the characters.

The pooling means and the team formation updating means can be executed after the registration configuring means has created all of the teams of the game players.

The above-described configuration can provide an advantage that is the same as one of the previously described configurations. In addition, motivation to collect objects corresponding to characters can be increased.

The registration configuring means can include additionally registering means (e.g., the server processing unit 202, the game management sub-unit 220, and the card registration processing sub-sub-unit 222 shown in Fig. 11, a post-draft additionally registered player list 632 shown in Fig. 17, and steps S6 ("0") and S10 shown in Fig. 18) for additionally assigning a character corresponding to an object ID registered for use to a new team of the game player created by the team formation updating means.

The above-described configuration can provide an advantage that is the same as one of the previously described configurations. In addition, after new teams are created using the pooled characters, another character can be added to each of the teams.

The present invention will now be described, by way of example only, with reference to the accompanying drawings, in which:-
Fig. 1 illustrates an exemplary configuration of a game system;

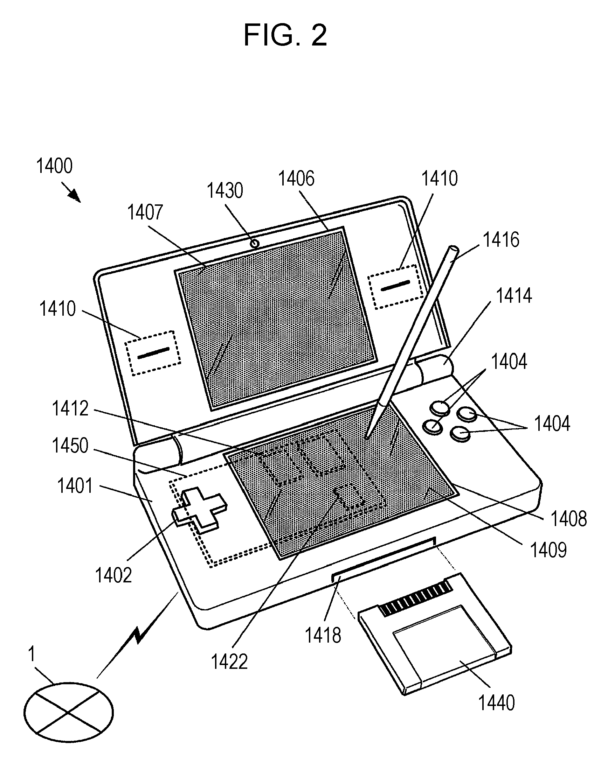

Fig. 2 is an external view of a mobile game machine representing an exemplary user terminal;

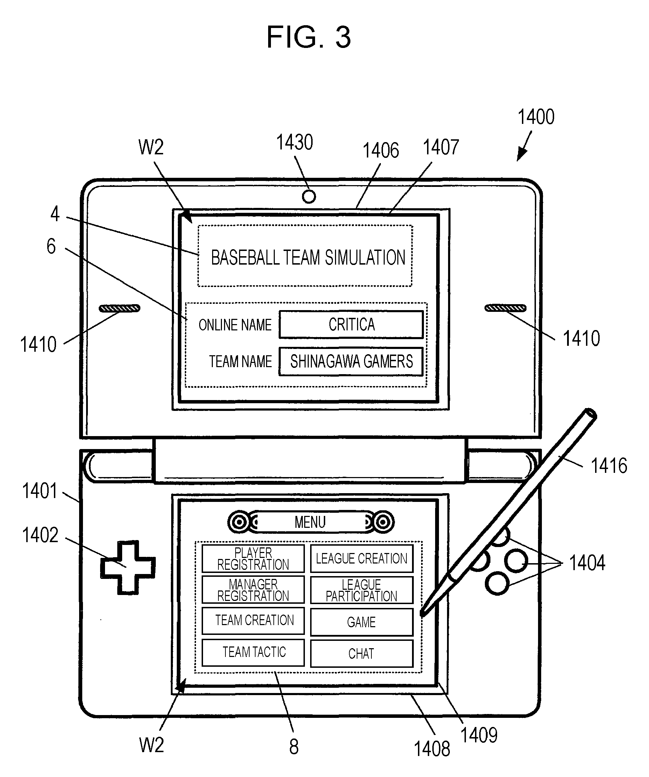

Fig. 3 illustrates an exemplary menu screen displayed on the user terminal;

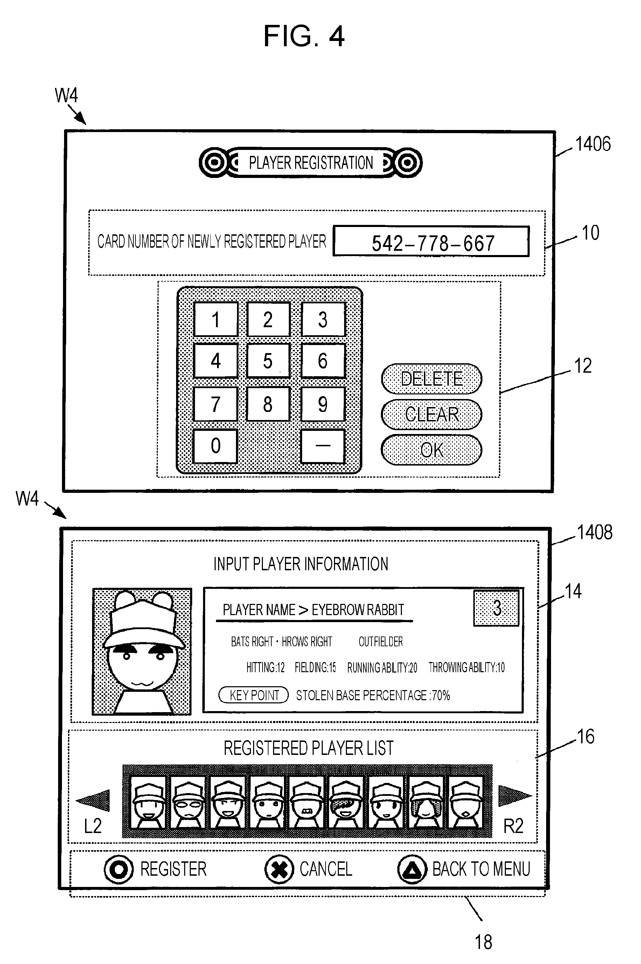

Fig. 4 illustrates an exemplary displayed player registration screen;

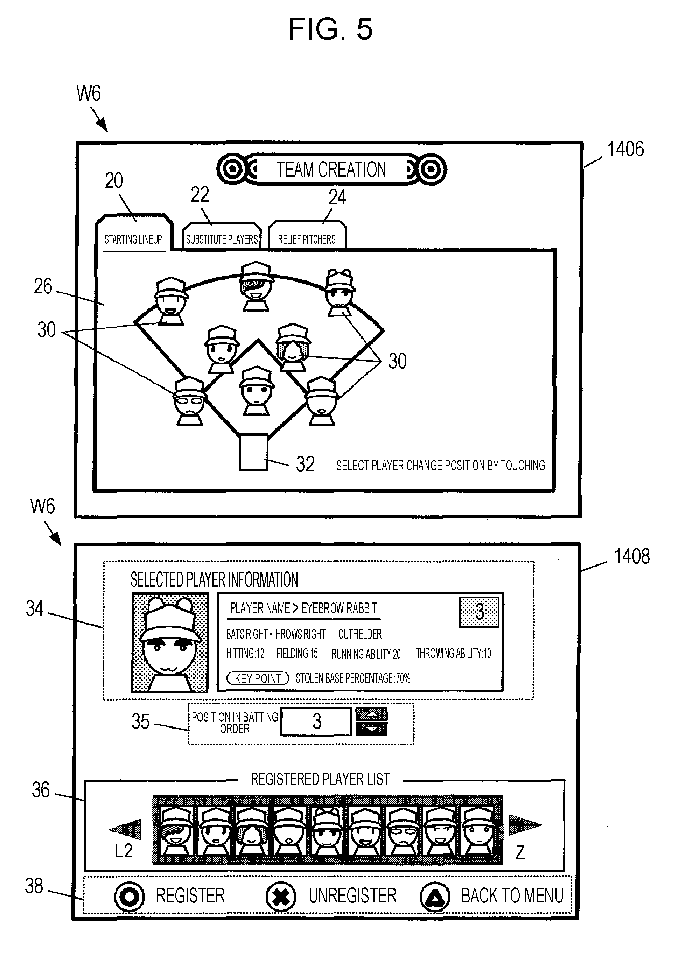

Fig. 5 illustrates an exemplary displayed team creation screen;

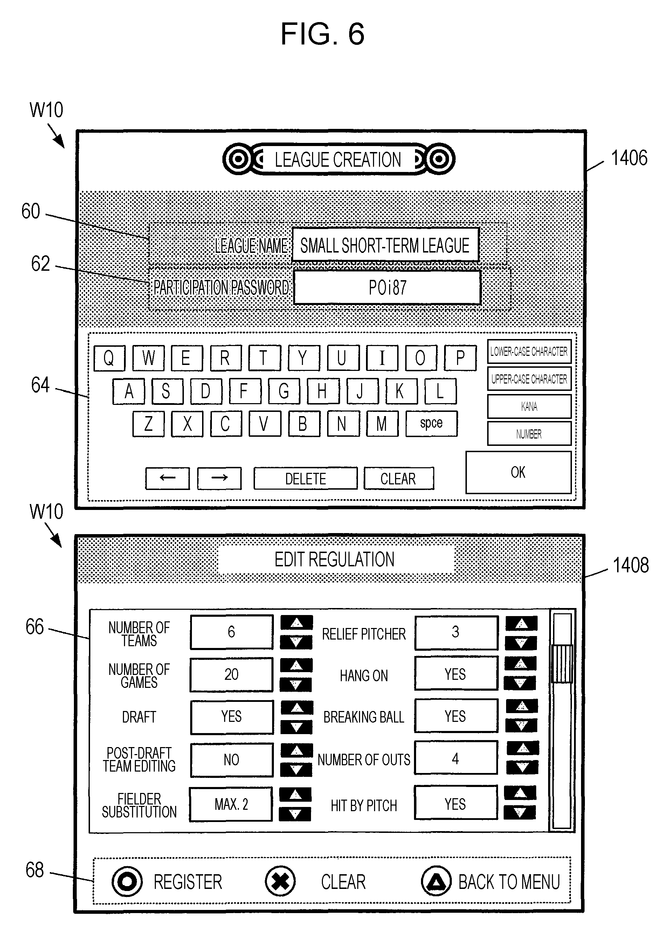

Fig. 6 illustrates an exemplary displayed league creation screen;

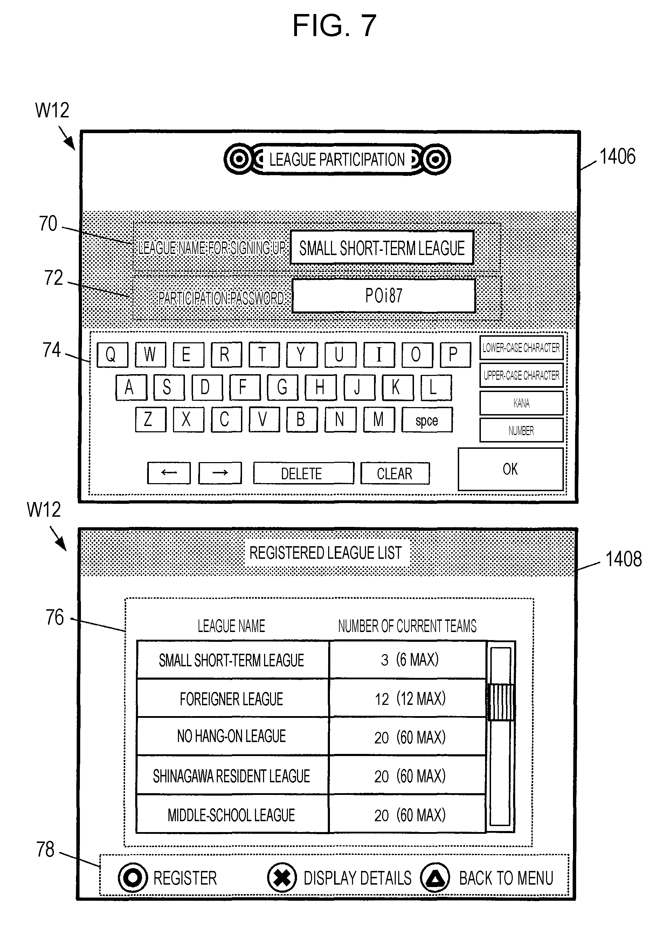

Fig. 7 illustrates an exemplary displayed league participation setting screen;

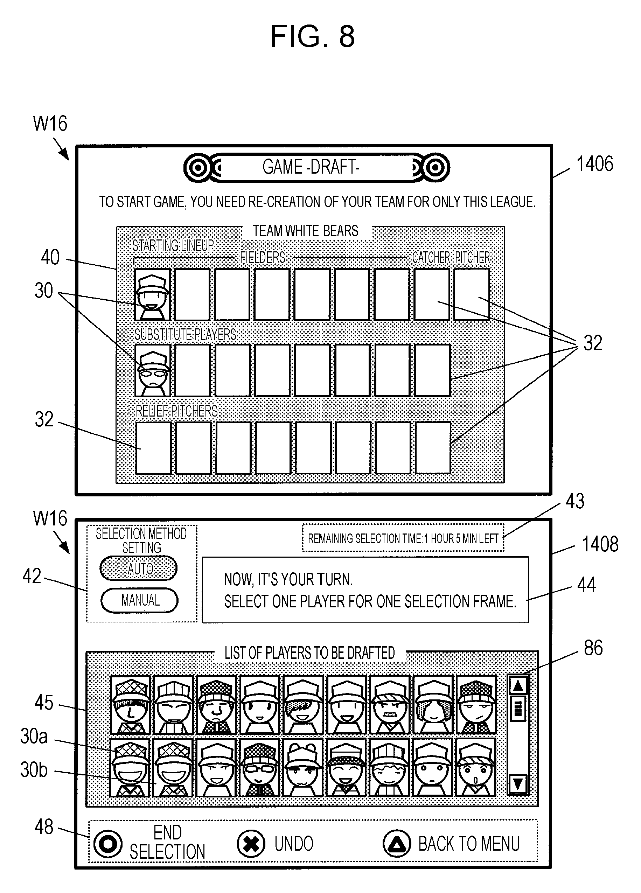

Fig. 8 illustrates an example of displayed draft screen;

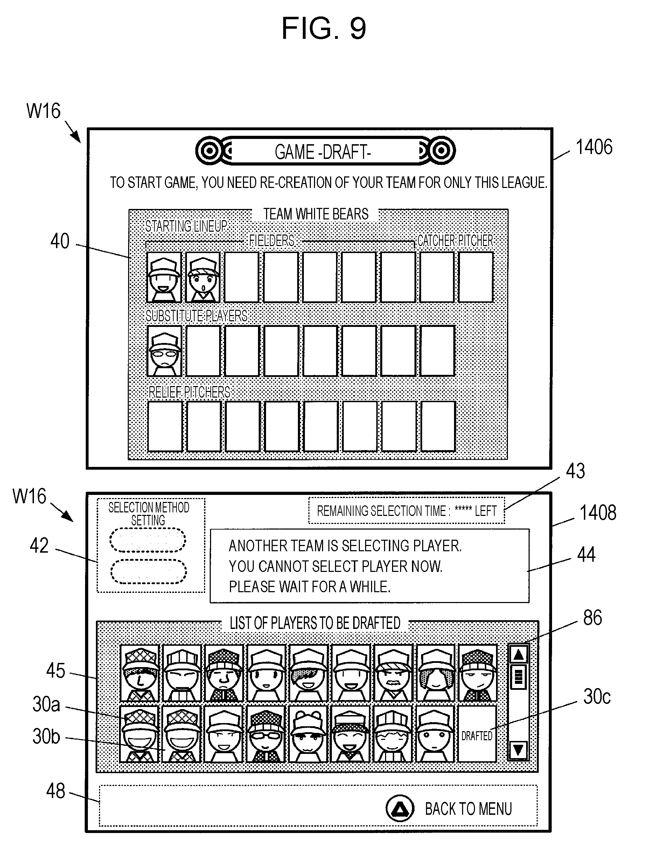

Fig. 9 illustrates an example of displayed draft screen;

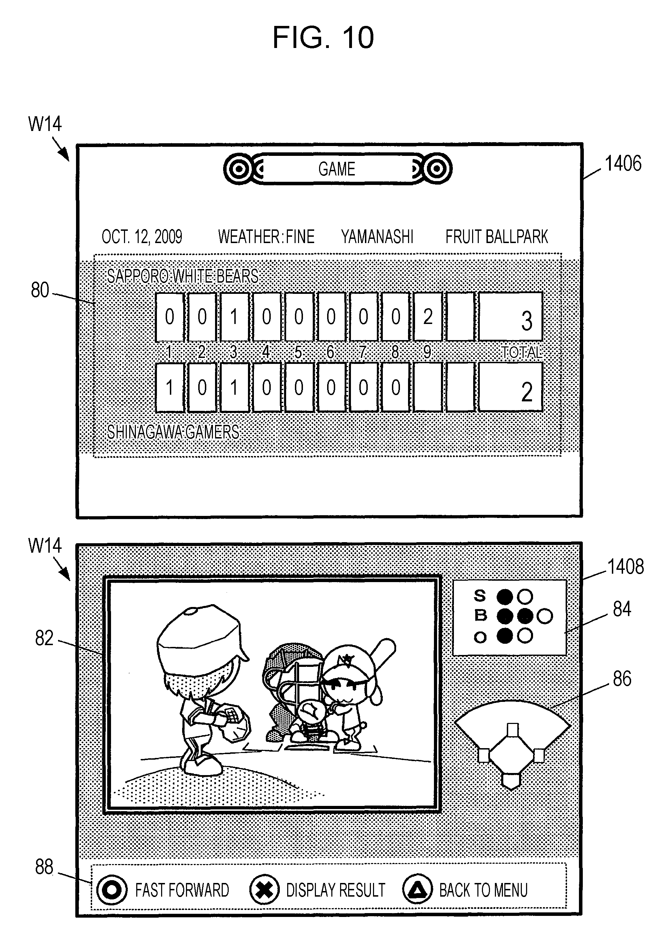

Fig. 10 illustrates an example of displayed game simulation screen;
Fig. 11 is an exemplary functional block diagram of the mobile game machine functioning as a user terminal and a server system;
Fig. 12 illustrates an exemplary data structure of game related data;

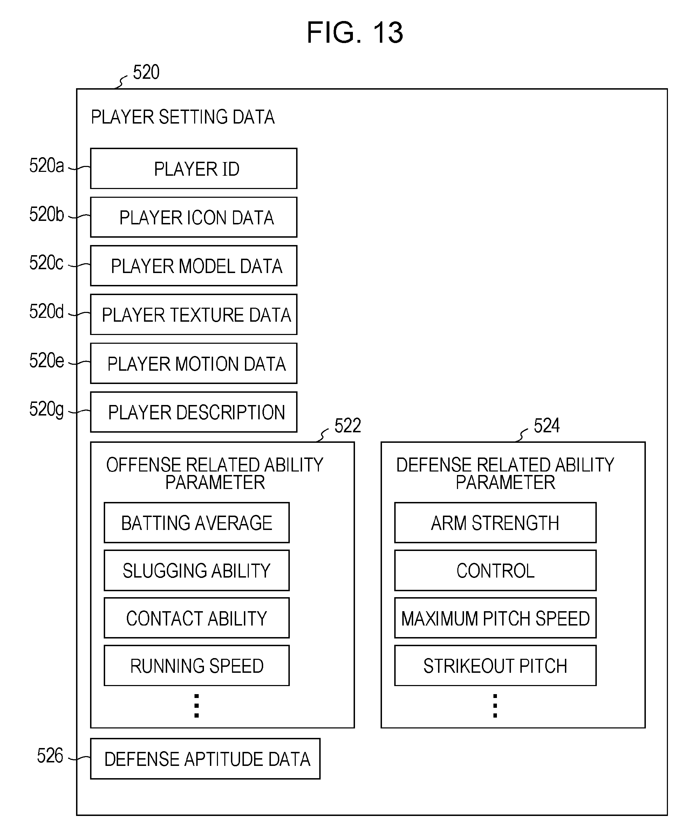

Fig. 13 illustrates an exemplary data structure of player setting data;
Fig. 14 illustrates an exemplary data structure of league setting data;

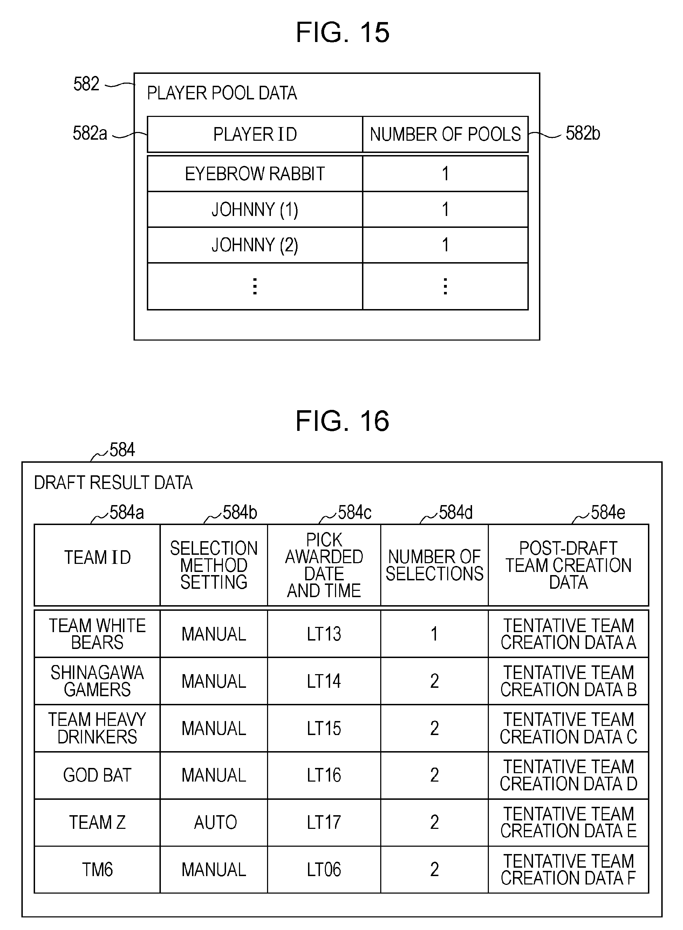

Fig. 15 illustrates an exemplary data structure of player pool data;
Fig. 16 illustrates an exemplary data structure of draft result data;
Fig. 17 illustrates an exemplary data structure of team setting data;
Fig. 18 is a flowchart of a main process performed by the server system according to an embodiment of the present invention;

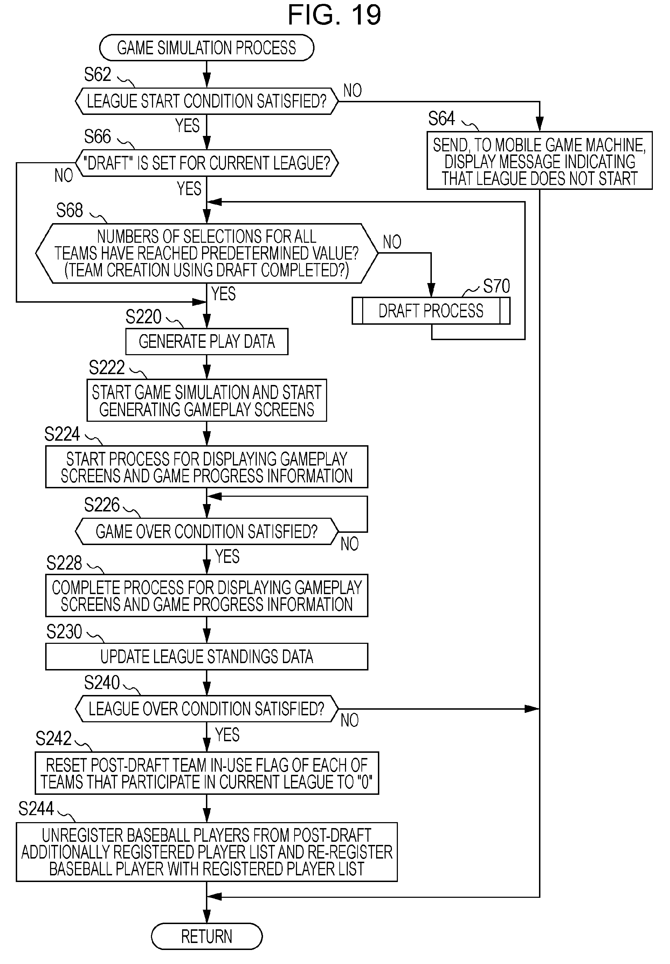

Fig. 19 is a flowchart of the procedure of a game simulation process;
Fig. 20 is a flowchart of the procedure of the draft process; and
Fig. 21 is a continuation of the flowchart of Fig. 20.

### First Embodiment

According to a first embodiment of the present invention, an example of a baseball simulation game in which a baseball player is registered by using a trading card is described. In such a baseball simulation game, groups each including a plurality of game characters having their own action tendencies and abilities are formed, and the actions of the groups are automatically controlled. As used herein, the term "player" refers to both a real player and a virtual player controlled through automatic control, such as an Al control using a computer.

### Configuration of Game System

Fig. 1 illustrates an exemplary configuration of a game system according to the present embodiment. According to the present embodiment, the system includes a user terminal, such as a personal computer 1200, a smart phone 1300, or a mobile game machine 1400, connected to a server system 1100 via a communication line 1. The user terminal communicates data required for playing a game with the server system 1100.

The communication line 1 is formed from a communication channel that allows data to pass therethrough. That is, examples of the communication line 1 include a dedicated line for direct connection (a dedicated cable), a local area network (LAN) using, for example, the Ethernet®, a telephone network, a cable network, and a communication network, such as the Internet. In addition, communication may be performed wired or wirelessly.

The server system 1100 includes a chassis 1104 containing a plurality of blade servers 1102 and a keyboard 1106 and a display monitor 1108 used for managing the blade servers 1102. Each of the blade servers 1102 includes a central processing unit (CPU), an I/O module, an IC memory, and a storage, such as a hard disk. The blade server 1102 functions as a single server computer. The chassis 1104 includes such blade servers 1102, a power supply module for providing the power to the blade servers 1102, and a communication unit that connects the server system 1100 to the communication line 1.

According to the present embodiment, the server system 1100 natively supports a common gateway interface (CGI) program implementation language. Thus, the server system 1100 provides a variety of functions, such as registration of a user, authentication of a registered user (known as a login process), a baseball game, and a communication process between users (e.g., chat), using the CGI functions.

Note that the server system 1100 may be realized using a single server computer. Alternatively, a stationary home game machine may serve as the server system 1100.

Each of the personal computer 1200, the smart phone 1300, and the mobile game machine 1400 serves as a computer that can execute a game screen display program. The game screen display program displays a variety of screens in accordance with display information received from the server system 1100 and transmits, to the server system 1100, request information in accordance with an input operation.

If the display information generated by the server system 1100 has a dedicated data format, the game screen display program is formed from a dedicated client program. In contrast, if the display information has a data format for interactively controlling images and sound using HTML or Adobe® Flash, the game screen display program can be generated using a program working on a general-purpose Web browser.

In order to play a baseball game according to the present embodiment, a game player 2 needs to purchase dedicated trading cards 3 having designs corresponding to a baseball player and a manager in advance. A set of a predetermined number of the trading cards 3 is sold in the form of a package.

The trading cards 3 include a manager card 3a and baseball player cards 3b including a pitcher, a catcher, and fielders. One card is assigned to a manager or a baseball player appearing in a game in advance (a plurality of cards may be assigned to the same baseball player. However, for simplicity, one card is assigned in the present embodiment). Each of the cards has unique card information associated with a manager or a baseball player appearing in a game. According to the present embodiment, a card number is printed as the card information. However, a bar code or a QR code may be used as the card information.

The game player 2 registers an acquired trading card 3 using a user terminal so that a baseball player indicated by the trading card 3 can be used in games. Thereafter, the game player 2 creates his/her own team using the registered baseball players and enjoys playing a baseball league game in which his/her team plays against another team.

### Configuration of User Terminal

An exemplary configuration of the mobile game machine 1400, which is a typical user terminal, is described next. Fig. 2 is an external view of the mobile game machine 1400, which is an example of a user terminal according to the present embodiment.

The mobile game machine 1400 has a machine body 1401 that is flippable about a hinge 1414. The machine body 1401 includes a direction input key 1402, push switches 1404, a first liquid crystal display 1406, a second liquid crystal display 1408, a speaker 1410, an image sensor 1430, and a control unit 1450. The first liquid crystal display 1406 and the second liquid crystal display 1408 include touch panels 1407 and 1409 disposed thereon, respectively. By touching the touch panel 1407 or 1409 using, for example, a stylus pen 1416, information regarding any point in the display screen can be input.

The machine body 1401 further includes a memory card reader 1418 that can read and write data from and to a memory card 1440. The memory card 1440 serves as a computer-readable information storage medium. The memory card 1440 stores a program and a variety of setting data items required for the control unit 1450 of the mobile game machine 1400 to perform a variety of computing processes regarding a gameplay. In addition, the machine body 1401 includes an internal battery, a power button, and volume control button (none are shown).

The touch panels 1407 and 1409 cover almost the entirety of display screens of the first liquid crystal display 1406 and the second liquid crystal display 1408 without obstructing the display. When a game player touches the touch panel 1407 or 1409 using the stylus pen 1416 (or a finger), the touch panel 1407 or 1409 can output, to the control unit 1450, the coordinate information regarding the touched position in an orthogonal coordinate system where the upper left corner is the origin.

The image sensor 1430 is an image pickup element formed from a CCD (Charge Coupled Device) image sensor or a CMOS (Complementary Metal Oxide Semiconductor) image sensor. If the trading card 3 has card information assigned thereto in the form of a bar code or a QR code, the image sensor 1430 is used for capturing the image of the bar code or the QR code.

The control unit 1450 corresponds to a control board of the game machine. The control unit 1450 includes a variety of microprocessors, such as a central processing unit (CPU) and a graphics processing unit (GPU), and a digital signal processor (DSP), an application specific integrated circuit (ASIC), and a variety of IC memories, such as a video RAM (VRAM), a random access memory (RAM), and a read only memory (ROM).

The control unit 1450 further includes a wireless communication module 1412, a driver circuit for driving the first liquid crystal display 1406 and the second liquid crystal display 1408, a driver circuit for driving the touch panel 1407 and the touch panel 1409, a circuit for receiving signals from the direction input key 1402 and the push switches 1404, an amplifier circuit for outputting an audio signal to the speaker 1410, and a so-called interface (I/F) circuit, such as a signal input/output circuit for the memory card reader 1418. These components of the control unit 1450 are electrically connected to one another via a bus circuit. Thus, data can be read or written, and signals can be exchanged.

The control unit 1450 reads the program and data stored in the memory card 1440 using a memory card reader 1418 and temporarily stores the programs and data in an internal IC memory. Thereafter, the control unit 1450 executes the readout program and performs computation. In this way, the control unit 1450 controls the units of the mobile game machine 1400 in accordance with input operation performed on the direction input key 1402, the push switches 1404, or the touch panels 1407 and 1409.

Note that according to the present embodiment, the mobile game machine 1400 reads the necessary program and various setting data items from the memory card 1440. However, the main program and data loaded into the control unit 1450 may be prestored in an IC memory. Alternatively, the mobile game machine 1400 may connect itself to the communication line 1, such as the Internet, a local area network (LAN), or a wide area network (WAN), wired or wirelessly via the wireless communication module 1412. Thereafter, the mobile game machine 1400 may download the main program and data from an external apparatus.

### Brief Overview of Game

A baseball game according to the present embodiment is briefly described with reference to Figs. 3 to 10. First, a game player starts the mobile game machine 1400, which is a user terminal, and instructs the mobile game machine 1400 to execute a game screen display program. Subsequently, the game player connects the mobile game machine 1400 to the server system 1100 via the communication line 1 and performs a predetermined login procedure. As shown in Fig. 3, a menu screen W2 is then displayed.

According to the present embodiment, the mobile game machine 1400 has a dual display. The first liquid crystal display 1406 displays a title display section 4 and an account display section 6. The second liquid crystal display 1408 displays a menu selection icon display section 8 including a plurality of menu selection icons. The game player selects a desired menu selection icon by touching the icon using the stylus pen 1416 or by operating the direction input key 1402 and the push switches 1404.

In order to start the baseball game according to the present embodiment, the game player needs to register the right to use a baseball player card 3b of the acquired trading cards 3 so that the baseball player card 3b can be used in the game. Such an operation is referred to as "player registration".

When an icon "Player Registration" in the menu selection icon display section 8 is selected, request information corresponding to the selecting operation, that is, a request for registration of use of the object (the card) is sent from the mobile game machine 1400 to the server system 1100. Upon receiving the request information, the server system 1100 sends back display information for displaying a player registration screen on the mobile game machine 1400.

Similarly, if some operation is performed on the mobile game machine 1400, request information corresponding to the operation is sent to the server system 1100. Upon receiving the request information, the server system 1100 performs a game management process corresponding to the request information and sends back new display information to the mobile game machine 1400.

Fig. 4 illustrates an example of a player registration screen W4 of the game according to the present embodiment. The upper section of Fig. 4 indicates an upper screen. The lower section of Fig. 4 indicates a lower screen. This also applies to the other drawings.

In the player registration screen W4, the following is displayed: a card number entry field 10 used for inputting the card number of a card to be registered, a software keyboard 12 used for inputting the card number, a baseball player information display section 14 used for displaying a description and a parameter (skill) value for the baseball player corresponding to the input card number, and a registered player list 16 used for displaying the icons of the registered baseball players, and an operation guide display 18. If the game player views the baseball player information display section 14 and wants to register the baseball player, the game player performs a predetermined registration operation by following the operation guide display 18. After the game player has registered the desired player card 3b and performed an operation for going back to the menu in order to display the menu screen again, the menu screen W2 is displayed again.

Similarly, if the game player selects "Manager Registration" in the menu selection icon display section 8 of the menu screen W2, a manager card 3a can be registered as in the baseball player registration. In this way, the manager card 3a can become the manager of the team.

After baseball player registration and manager registration are completed, the game player creates his/her own team by selecting a starting lineup, substitute players, and relief pitchers. In order to create a team, the game player selects "Team Creation" in the menu selection icon display section 8 of the menu screen W2 (refer to Fig. 3).

When "Team Creation" is selected, the mobile game machine 1400 displays, for example, a team creation screen W6 shown in Fig. 5. The team creation screen W6 includes a starting lineup assignment tag 20 used for switching to a starting lineup assignment screen, a substitute player assignment tag 22 used for switching to a substitute player assignment screen, and a relief pitcher assignment tag 24 used for switching to a relief pitcher assignment screen. The game player selects a desired one of the assignment tags.

If the game player selects the starting lineup assignment tag 20, a starting lineup setting display section 26 is displayed. The starting lineup setting display section 26 displays a schematic bird's-eye view of a field. In addition, player icons 30 of the currently registered baseball players are displayed on the field at their positions. If a player has not yet been assigned to a position, a blank icon 32 is displayed at that position.

These icons can be selected by touching the icons using the stylus pen 1416 or using the direction input key 1402 and the push switches 1404 (refer to Fig. 2). In this way, if one of the icons in the starting lineup setting display section 26 is selected, the information regarding a baseball player assigned to the position is displayed in a player information display section 34.

If the game player wants to unregister a baseball player assigned to play the selected position, the game player performs a predetermined "Unregister" operation while following an operation guide display 38. If the game player wants to register a new baseball player that plays the selected position, the game player selects the baseball player by touching a baseball player icon of the baseball player in a registered player list 36. The position in the batting order shown in the player information display section 34 can be set using a batting order position setting field 35.

If the game player selects the substitute player assignment tag 22, a substitute player can be assigned. Basically, an assignment operation that is the same as the assignment operation for a starting lineup can be performed. More specifically, for example, frames used for assigning substitute players are displayed instead of the starting lineup setting display section 26. A player icon 30 of a selected substitute player or a blank icon 32 is displayed in each of the frames used for assigning substitute players. If one of the frames is selected by touching the frame using, for example, the stylus pen 1416, the frame becomes editable. If one of the baseball players is selected from the registered player list 36 for the substitute player frame, the information regarding the selected baseball player is displayed in the player information display section 34.

Similarly, the game player selects the relief pitcher assignment tag 24, a relief pitcher is assigned. An assignment operation that is the same as the assignment operation for a substitute player can be performed. More specifically, for example, two types of frames, namely, "middle reliever" frames and "closer" frames are displayed instead of the starting lineup setting display section 26. The player in a frame can be changed by selecting the frame using, for example, the stylus pen 1416 and, subsequently, selecting one of the baseball players from the registered player list 36.

If the number of the players registered in the registered player list 36 is smaller than a predetermined number of the members of a starting lineup, a virtual player is automatically assigned. Such a player is referred to as a "rental player". A rental player is a character for which registration of the use right of the card number (ID) is not required. A rental player is assigned to a virtual trading card. The rental player is inferior to a player assigned to a real trading card 3 in terms of various abilities thereof.

After such team creation is completed, the game player determines which one of the leagues the created team participates in. The game player can create a league to which the team can join or select one from among leagues that other game players have already created.

If the game player selects "League Creation" in the menu selection icon display section 8 of the menu screen W2 (refer to Fig. 3), the mobile game machine 1400 displays, for example, a league creation screen W10 shown in Fig. 6. The league creation screen W10 includes a league ID setting field 60 used for setting the name of a league, a participation password setting field 62 required for participating in the league, a software keyboard 64 used for inputting the league name and the password character string (including a number), a regulation setting section 66, and an operation guide display 68.

In the regulation setting section 66, a plurality of combinations of a regulation item of the league and the setting item for the regulation item are displayed in the form of a pull-down menu. For example, according to the present embodiment, the regulation items include (1) the "number of baseball teams" used for setting a maximum number of teams that can participate in the league, (2) the "number of games" indicating the number of games each team plays in the league, (3) a "draft" indicating the presence/absence of a function in which before a league starts, the game players sequentially selects one of the players in the starting lineup, substitute players, and relief pitchers of all teams participating in the league and re-create their own teams, (4) "post-draft team editing" indicating whether a team can be re-created after a draft is performed, and (5) the "relief pitcher" indicating the number of relief pitchers substitutable during a game. These regulation items are not restricted by real sport rules and, therefore, can be freely set.

Using the league creation screen W10, the game player can freely set the name of a league, the participation password, and the regulation. Thereafter, if the game player performs a predetermined "Register" operation using the operation guide display 68, a new league is created. Note that the game player can widely distribute the league name and the participation password by telling the name and password to his/her close friends. That is, a game can be enjoyed among close friends through the league. In addition, the game players can enjoy the game based on rules that are unrealistic by changing the settings of the regulations.

If "League Participation" in the menu selection icon display section 8 of the menu screen W2 (refer to Fig. 3) is selected, the mobile game machine 1400 displays, for example, a league participation setting screen W12 shown in Fig. 7. The league participation setting screen W12 includes a league ID input field 70 used for inputting the league ID which the game player wants to participate in, a password input field 72 for inputting the password required for the participation, a software keyboard 74 used for inputting character strings (including a number) of the league ID and the password, a league list display 76 for displaying information regarding the registered leagues, and an operation guide display 78.

The game player selects the name of a league (the league ID according to the present embodiment) which the game player wants to participate in by, for example, touching the name of the league displayed in the league list display 76 or inputting the name of the league using the software keyboard 74. Thereafter, the game player inputs the preacquired password for participating in the league using the software keyboard 74 and performs a predetermined registration operation while following the operation guide display 78. In this way, the team created by the game player can be registered in the league having the input league name.

After team creation and registration in a league which the team participates in are completed, the game player can cause his/her own team to play against a team of another game player.

If "Game" in the menu selection icon display section 8 of the menu screen W2 (refer to Fig. 3) is selected, the server system 1100 performs a simulation process of a game in which the game player's team plays against a team of another game player in the same league (i.e., starts automatic control of a game). The simulation results are transmitted to the mobile game machine 1400 as needed.

If "Draft" is set to "YES" in the regulation settings of the league, the mobile game machine 1400 displays a draft screen W16 shown in Figs. 8 and 9. The draft screen W16 is used for an operation performed before a game simulation process is started.

In the draft screen W16, all the created teams in the league are taken back to the drawing board, and all characters (the players in the starting lineup, the substitute players, and relief pitchers) of all the teams are pooled so that all the game players can select their characters. Thereafter, the game players each select one of the baseball players in the pool in turn. Thus, the game players re-create their own teams in the league in advance. Since the game players each select one of the baseball players in turn, this operation is referred to as making "draft", which is used for a real professional baseball draft. However, since this is not a real professional baseball draft, the name "draft" may be changed as needed.

The draft screen W16 includes a baseball player setting field 40, a selection method setting field 42, a selecting time period 43, an annotation field 44, a draft player list 45, and an operation guide display 48.

The baseball player setting field 40 displays the settings of the team of the game player in the league, that is, the settings of the re-created team of the game player. In the baseball player setting field 40, the baseball players are displayed in three types of frames, namely, starting lineup frames, substitute player frames, and relief pitcher frames. In the frames of each type, the blank icons 32 are displayed in an initial state. If any one of the baseball players is set, the blank icon 32 is replaced with the player icon 30 of the baseball player.

By using the selection method setting field 42, the game player can select one of methods for selecting a baseball player. That is, the game player can select one of a method in which a baseball player is selected by the game player (manual) and a method in which a baseball player is selected by the computer (auto). For example, the selection buttons "Manual" and "Auto" are displayed in the selection method setting field 42, and the game player clicks one of the buttons.

If "Manual" is set in the selection method setting field 42, the game player selects one of the player icons 30 in the draft player list 45 by touching the player icon 30 using, for example, the stylus pen 1416. Thereafter, the game player drags and drops the player icon 30 onto one of the blank icons 32 in the baseball player setting field 40. In this way, the game player can select the baseball player and performs the settings. Note that a baseball player falls in one of two categories: a pitcher category and a fielder category. The game player can select only a baseball player in the pitcher category for a relief pitcher. In addition, the game player can select only an infielder or an outfielder for a fielder category.

In contrast, if "Auto" is set in the selection method setting field 42, the computer automatically selects one of the baseball players when it becomes the game player's turn. Note that even when the setting "Auto" is selected, only a baseball player who plays the position corresponding to the category (a pitcher category/a fielder category) is selectable as in the manual setting.

The selecting time period 43 indicates the remaining time to make one selection. The maximum period of time to make one selection can be appropriately determined. According to the present embodiment, even when "Manual" is set in the selection method setting field 42, selection of a baseball player is forcibly and automatically performed if the remaining time is "0".

The annotation field 44 displays a message sent to the game player or operation guide. Fig. 8 illustrates an example of a game screen displayed when "Manual" is set in the selection method setting field 42 and it becomes the game player's turn. A message prompting the game player to make selection is displayed in the annotation field 44. In contrast, Fig. 9 illustrates an example of a game screen displayed when the game player waits for selection performed by another game player. A message indicating that the game player needs to wait for selection performed by another game player and no operations are allowed is displayed in the annotation field 44. Note that in a selection waiting state as shown in Fig. 9, the game player can only view the draft player list 45 and go back to the menu screen W2. However, the operation for selecting a baseball player is disabled.

The draft player list 45 includes a list of baseball players selectable by the game player. According to the present embodiment, by operating a scroll bar and scrolling the screen down and up, the game player can view all of the player icons of the baseball players to be drafted.

The baseball players displayed in the screen are originally the players of all the teams that participate in the league. The baseball players usable by registering the trading cards 3 and the rental players are equally included. If the same type of baseball player (the same baseball player) is included in different teams, the player is considered as different players. For example, in Fig. 8, the player 30a and a player 30b correspond to such a player. It is desirable that the icon of a drafted player be removed from the list or be replaced with a dedicated drafted icon 30c.

A selection operation guide is displayed in the operation guide display 48. According to the present embodiment, "End Selection" for instructing completion of the current selection (i.e., selection for one player), "Undo" for canceling the selection, and "Back to Menu" for going back to the menu screen are displayed. However, the selection operation guide is not limited thereto. Other guide menus can be added as needed.

After re-creation of all of the teams that participate in the league is completed, a game in the league can be started. If "Game" in the menu selection icon display section 8 of the menu screen W2 (refer to Fig. 3) is selected, the server system 1100 performs a simulation process of a game in which the game player's team plays against a team of another game player in the same league (i.e., starts automatic control of a game). The results of simulation are transmitted to the mobile game machine 1400 as needed. The mobile game machine 1400 displays, for example, a game simulation screen W14 shown in Fig. 10.

The game simulation screen W14 includes a scoreboard 80, a gameplay screen display section 82, a count display section 84, an on base status display section 86, and an operation guide display 88.

The gameplay screen display section 82 displays an image indicating the gameplay. This gameplay image is generated by the server system 1100 that simulates the progress of the game. Generation of display information for the gameplay and processing for displaying the display information on the mobile game machine 1400 can be performed as in gameplay screen display of a widely used CGI game.

The game player watches and enjoys the game in the game simulation screen W14 in which his/her own team plays against a team of a friend participating in the same league.

### Description of Functional Blocks

An exemplary functional structure according to the present embodiment is described next.

Fig. 11 is a functional block diagram illustrating exemplary functional configurations of the mobile game machine 1400 functioning as a user terminal and the server system 1100 according to the present embodiment.

The mobile game machine 1400 includes an operation input unit 100, a processing unit 200, and a sound output unit 350, an image display unit 360, a communication unit 370, and a storage unit 500.

The operation input unit 100 outputs, to the processing unit 200, an operation input signal in accordance with a variety of operations performed by a game player. For example, the operation input unit 100 includes push switches, a joystick, a touch pad, a trackball, and one of a multi-axis detecting acceleration sensor having at least two detection axes, a plurality of single-axis detecting acceleration sensors having different detecting directions, a multi-directional detection inclination sensor having at least two detection directions, and a plurality of unidirectional detection inclination sensor units having different detecting directions. The direction input key 1402, the push switches 1404, and a three-axis acceleration sensor 1422 shown in Fig. 2 correspond to these components.

The operation input unit 100 further includes a touch point detecting device 104 and an image pickup device 106.

The touch point detecting device 104 is formed from a device capable of detecting a touched point in the display screen area. The touch panels 1407 and 1409 shown in Fig. 2 correspond to the touch point detecting device 104.

The image pickup device 106 is a device for acquiring image information. For example, the image pickup device 106 is formed from a CCD image sensor or a CMOS image sensor. The image sensor 1430 shown in Fig. 2 corresponds to the image pickup device 106. In a configuration in which card information regarding a manager card 3 (3a) and a player card 3 (3b) is provided in the form of a bar code or a QR code, it is desirable that the code be read by the image pickup device 106.

The processing unit 200 is formed from electronic components, such as a microprocessor (e.g., a CPU or a GPU), an application specific integrated circuit (ASIC), and an IC memory. The processing unit 200 performs data input and output control among the functional units including the operation input unit 100 and the storage unit 500. In addition, the processing unit 200 performs a variety of computing operations in accordance with predetermined program and data and the operation input signals received from the operation input unit 100. Thus, the processing unit 200 controls the operation performed by the mobile game machine 1400. The control unit 1450 shown in Fig. 2 corresponds to the processing unit 200. According to the present embodiment, the processing unit 200 includes a game screen display control sub-unit 210, a sound generating sub-unit 250, and an image generating sub-unit 260, and a communication control sub-unit 270.

The game screen display control sub-unit 210 receives display information from the server system 1100 and displays a variety of game screens, such as the menu screen W2, the player registration screen W4, the team creation screen W6, the league creation screen W10, the league participation setting screen W12, the draft screen W16, and the game simulation screen W14. Thereafter, the game screen display control sub-unit 210 sends, to the server system 1100, request information in accordance with an operation performed by the game player on the operation input unit 100 for each of the game screens.

More specifically, such processing is realized by using a Web browser based technique for actively controlling screen display using HTML, Java®, and CSS (cascading style sheets) or an active plug-in, such as Adobe® Flash. However, another technique may be used.

The sound generating sub-unit 250 includes, for example, a digital signal processor (DSP), a processor such as a sound synthesis IC, and a sound-file reproducible audio codec. The sound generating sub-unit 250 generates sound signals of sound effects for a game, back-ground music (BGM), and sound for a variety of operations in accordance with the results of processing performed by the game screen display control sub-unit 210. Thereafter, the sound generating sub-unit 250 outputs the sound signals to the sound output unit 350.

The sound output unit 350 is formed from a unit for outputting, for example, sound of the sound effects and the BGM in accordance with the sound signals input from the sound generating sub-unit 250. The speaker 1410 shown in Fig. 2 corresponds to the sound output unit 350.

The image generating sub-unit 260 includes, for example, a processor, such as a GPU or a DSP, a video signal IC, a program such as video codec, and a frame rendering IC memory, such as a frame buffer. The image generating sub-unit 260 generates one game screen per frame period (e.g., 1/60 second) in accordance with the result of processing performed by the game screen display control sub-unit 210 and outputs the generated game screen to the image display unit 360.

The image display unit 360 displays a variety of game screens in accordance with the image signals input from the image generating sub-unit 260. For example, the image display unit 360 is formed from an image display apparatus, such as a flat panel display, a cathode ray tube (CRT), a projector, or a head-mounted display. According to the present embodiment, the first liquid crystal display 1406 and the second liquid crystal display 1408 shown in Fig. 2 correspond to the image display unit 360.

The communication control sub-unit 270 performs data processing for data communication. The communication control sub-unit 270 exchanges data with an external apparatus via the communication unit 370.

The communication unit 370 is connected to the communication line 1. The communication unit 370 performs a communication process. For example, the communication unit 370 is formed from a wireless communication device, a modem, a terminal adaptor (TA), or a cable jack of a communication cable and a control circuit. The wireless communication module 1412 shown in Fig. 2 corresponds to the communication unit 370.

The storage unit 500 stores a system program that causes the processing unit 200 to perform a variety of functions for overall control of the mobile game machine 1400 and a program and a variety of data items required for gameplay. In addition, the storage unit 500 is used as a work area of the processing unit 200. The results of computation performed by the processing unit 200 in accordance with execution of the variety of programs and input data received from the operation input unit 100 are temporarily stored in the storage unit 500. This function is realized by, for example, an IC memory, such as a RAM or a ROM, a magnetic disk, such as a hard disk, or an optical disk, such as a CD-ROM or a DVD. The IC memory or the memory card 1440 mounted in the control unit 1450 shown in Fig. 2 correspond to the storage unit 500.

According to the present embodiment, the storage unit 500 stores a system program 504 and a game screen display control program 506. The system program 504 provides a basic input and output function of the mobile game machine 1400 serving as a computer. The game screen display control program 506 is an application program that is read and executed by the processing unit 200 in order to realize the function of the game screen display control sub-unit 210. However, the game screen display control program 506 may be included in the system program 504.

According to the present embodiment, the server system 1100 includes an operation input unit 102, a server processing unit 202, an image display unit 362, a communication unit 372, and a server storage unit 502.

The operation input unit 102 is a unit used for inputting a variety of operations in order to manage a server. The operation input unit 102 has a configuration similar to that of the operation input unit 100 of the mobile game machine 1400. The keyboard 1106 shown in Fig. 1 corresponds to the operation input unit 102.

The server processing unit 202 is formed from electronic components, such as a microprocessor (e.g., a CPU or a GPU), an ASIC, and an IC memory. The server processing unit 202 performs data input and output control among the functional units including the operation input unit 102 and the server storage unit 502. In addition, the server processing unit 202 performs a variety of computing operations in accordance with predetermined program and data and the operation input signals received from the operation input unit 102. Thus, the server processing unit 202 controls the overall operation performed by the server system 1100. According to the present embodiment, the server processing unit 202 includes a game management sub-unit 220, an image generating sub-unit 262, and a communication control sub-unit 272.

The game management sub-unit 220 generates display information for a variety of game screens to be displayed on a user terminal, manages information regarding game players participating in the baseball simulation game, manages the team setting information, determines the tactic of the team, changes the abilities of the baseball players in accordance with the tactic, and performs a simulation process.

More specifically, the game management sub-unit 220 includes a card registration processing sub-sub-unit 222, a team creation processing sub-sub-unit 224, a league creation processing sub-sub-unit 230, and a league participation setting processing sub-sub-unit 232, and a game progress control sub-sub-unit 234. The game progress control sub-sub-unit 234 includes a draft controller 236.

The card registration processing sub-sub-unit 222 performs processing regarding registration of the right of use for trading cards 3 (a manager card 3a and a player card 3b, refer to Fig. 1). Thus, the game player can use a baseball player corresponding to the trading card 3 in the game. For example, the card registration processing sub-sub-unit 222 generates display information regarding the player registration screen W4 (refer to Fig. 4), verifies the card number, and makes a list of the baseball players corresponding to the registered cards.

The team creation processing sub-sub-unit 224 generates display information for the team creation screen W6 (refer to Fig. 5) to be displayed on a user terminal and creates a team for the game player in accordance with an input operation performed on the team creation screen W6 displayed on the user terminal. That is, the team creation processing sub-sub-unit 224 performs a process for creating a starting lineup, a process for listing substitute players, and a process for listing relief pitchers. In the process for listing substitute players, a process for setting the reason for substitution is performed for each of the substitute players.

Even when the team creation processing sub-sub-unit 224 selects the baseball players set to be selectable by the card registration processing sub-sub-unit 222 while keeping the type of position in the field, those may be too few of each of starting lineup, substitute players, and relief pitchers. That is, the baseball players for playing a game may be short on numbers. In such a case, the team creation processing sub-sub-unit 224 automatically assigns rental players to make up the numbers. In this way, even when a game player does not have a sufficient number of trading cards 3, the game player can enjoy playing a game.

However, if the league regulation item "Post-draft team creation" is set to "NO", the team creation processing sub-sub-unit 224 disables team editing of a team that is to participate in the league from start of the league until a league end condition is satisfied (e.g., a predetermined number of games have been played). In contrast, if the league regulation item "Post-draft team creation" is set to "YES", the team creation processing sub-sub-unit 224 enables team editing in which, for example, a registered player is replaced by a new player registered after the draft is completed or the new player is additionally added to a team.

The league creation processing sub-sub-unit 230 performs processing for creation of a framework of a parent population used for selecting an opposing team on the basis of an input operation performed by the game player. More specifically, the league creation processing sub-sub-unit 230 performs a process for setting an ID, such as a league name, a condition for participating in the parent population (including a password), and regulations applied to a game against the opposing team selected from the parent population. Still more specifically, the league creation processing sub-sub-unit 230 generates display information regarding the league creation screen W10 and stores league setting information generated in accordance with operation inputs to the league creation screen W10 in the server storage unit 502. Note that if the game is a tournament game rather than a league game, the parent population is set to a tournament.

The league participation setting processing sub-sub-unit 232 performs a procedure for allowing the team created by the game player to participate in the parent population created by the league creation processing sub-sub-unit 230. More specifically, the league participation setting processing sub-sub-unit 232 generates display information regarding the league participation setting screen W12 to be displayed on the user terminal. Thereafter, the league participation setting processing sub-sub-unit 232 performs a participation registration process on the basis of input operation performed on the league participation setting screen W12.

The game progress control sub-sub-unit 234 is one of the functional units that realize automatic control of game play. According to the present embodiment, the game progress control sub-sub-unit 234 mainly performs the simulation process of a baseball game. That is, the game progress control sub-sub-unit 234 controls the baseball players of the team owned by the game player and baseball players of the other team using a predetermined program (e.g., control known as Al control) and determines the actions of the baseball players. In this way, the game progress control sub-sub-unit 234 simulates the baseball game. At that time, the game progress control sub-sub-unit 234 generates display information for the simulated game play to be displayed on the user terminal. As described above, according to the present embodiment, the game progress control sub-sub-unit 234 includes the draft controller 236.

If the league regulation item "Draft" is set to "YES", the draft controller 236 creates tentative teams that participate in the league for the game players before the league starts.

More specifically, the draft controller 236 tentatively pools the baseball players of the teams that participate in the league as baseball players to be drafted. At that time, if a plurality of teams have the same player, the player is considered as different players.

For player selection, the draft controller 236 sequentially awards the right to select a baseball player to the game players who own the teams of the league while changing the picking order for each round. Upon receiving an instruction from the game player having the right to select a baseball player, the draft controller 236 adds the selected baseball player to the team of the game player.

At that time, when the selection method is set to "Manual" and if the draft controller 236 has not received a selection instruction signal from the mobile game machine 1400 of the game player within a predetermined time limit from the time the selection right was awarded to the game player, the draft controller 236 automatically selects one of the baseball players on behalf of the game player. However, if the selection method is set to "Auto", the draft controller 236 automatically selects one of the baseball players immediately after the game player is awarded the selection right.

Note that the ability of the baseball player on the team created through a draft is set to that of a rental player even when the baseball player has registered using a trading card 3. This is to prevent a game player from losing motivation to purchase a trading card 3 for a desired baseball player, since the game player may be accustomed to set "Draft" to "YES" and borrow a trading card 3 of another game player.

The image generating sub-unit 262 generates an image regarding maintenance of the server system 1100 and outputs the image to the image display unit 362. When the image generating sub-unit 262 sends a still image or a moving image serving as display information of the game play, the image generating sub-unit 262 may generate such a gameplay image.

The image display unit 362 displays a variety of images for system management on the basis of image signals input from the image generating sub-unit 262. For example, the image display unit 362 is formed from an image display apparatus, such as a flat panel display, a cathode ray tube (CRT), a projector, or a head-mounted display. The display monitor 1108 shown in Fig. 1 corresponds to the image display unit 362.

The communication control sub-unit 272 performs data processing for data communication. The communication control sub-unit 272 exchanges data with an external apparatus via the communication unit 372.

The communication unit 372 is connected to the communication line 1. The communication unit 372 performs a communication process. For example, the communication unit 372 is formed from a wireless communication device, a modem, a terminal adaptor (TA), or a cable jack of a communication cable and a control circuit.

The server storage unit 502 stores a system program that causes the server processing unit 202 to perform a variety of functions for overall control of the server system 1100 and a program and a variety of data items required for managing a game play. In addition, the server storage unit 502 is used as a work area of the server processing unit 202. The results of computation performed by the server processing unit 202 in accordance with execution of the variety of programs are temporarily stored in the server storage unit it 502. This function is realized by, for example, an IC memory, such as a RAM or a ROM, a magnetic disk, such as a hard disk, or an optical disk, such as a CD-ROM or a DVD. In Fig. 1, an information storage medium, such as an IC memory and a hard disk, mounted in the blade servers 1102 corresponds to the server storage unit 502.

According to the present embodiment, the server storage unit 502 stores a server system program 512, a game management program 514, and game related data 516.

The server system program 512 is a system program that is read and executed by the server processing unit 202. Thus, the server system 1100 can have a required basic input and output function. The game management program 514 is also read and executed by the server processing unit 202. Thus, the function of the game management sub-unit 220 can be realized.

Fig. 12 illustrates an example of the game related data 516. The game related data 516 includes information regarding card registration and initial setting for characters appearing in a game. Examples of such data include card registration data 518, player setting data 520 for a plurality of baseball players, rental player setting data 536 for a plurality of rental baseball players, and manager setting data 540 for a plurality of managers.

The game related data 516 further includes information regarding a league. Examples of such data include league setting data 550 and a league registration list 551.

The game related data 516 further includes team setting data 600 that include information regarding a team and that are set by the game player and play data 650 including information generated and updated as needed when the game play progresses. Still furthermore, the game related data 516 includes a variety of information items required for managing and controlling the game as needed. Examples of such data include a timer, a counter, a flag, and an IP address of the mobile game machine 1400 that is logged in.

Such data items are described in more detail below.

The card registration data 518 includes a card number assigned to the trading card 3, a player ID or a manager ID which is identification information regarding the player or the manager corresponding to the card number, and an in-use flag associated with the card number. For example, such data are defined in the same manner as in widely used video games in which characters having types corresponding those of trading cards appear.

If a card use right registration process, such as "Player registration" or "Manager registration" is performed for a card, the card having a "not in-use" state is changed to a "in-use" state and, therefore, another game player cannot register the use right of the card.

The player setting data 520 includes information indicating the type of baseball player (e.g., a fielder, a catcher, or a pitcher), the ability of the baseball player, and information regarding graphic display. The player setting data 520 is prepared for each of the baseball players appearing in the baseball game according to the present embodiment.

For example, as shown in Fig. 13, the player setting data 520 for a baseball player includes a player ID 520a that contains identification information, such as the name of the player, player icon data 520b used for displaying the player icon 30 in, for example, the team creation screen W6, player model data 520c used for displaying a player playing a baseball in the game play screen display section 82 of the game simulation screen W14 (refer to Fig. 11), player texture data 520d, player motion data 520e, and a player description 520g.

The player description 520g contains text information to be displayed in the baseball player information display sections 14 and 34 of the player registration screen W4 and the team creation screen W6 (refer to Figs. 4 and 5).

The player setting data 520 further includes the information regarding the ability and aptitude of the player and the player's behavioral habit. Examples of such information include an offense related ability parameter 522, a defense related ability parameter 524, and defense aptitude data 526.

The offense related parameter 522 defines the abilities of the player in the case of offense, such as the hitting and running abilities. For example, the offense related ability parameter 522 includes the initial values of the following ability parameters: batting average, slugging ability, bat-ball contact ability, and running speed. The defense related parameter 524 defines the abilities of the player in the case of defense, such as pitching and fielding. For example, the defense related ability parameter 524 includes the initial values of the following ability parameters: arm strength, control, maximum pitch speed, and pay off pitch.

The defense aptitude data 526 indicates which fielding position the player has an aptitude for. A defense aptitude value is set for each of the fielding positions (0 (zero aptitude) to 100 (the highest aptitude)).

The rental player setting data 536 includes player setting data for a player automatically rented if the number of the cards acquired by the game player is less than the number of baseball players in the starting lineup. The structure of the data can be similar to that of the player setting data 520. However, the settings are made so that the rental player is obviously inferior to a regular player in terms of the various parameters of the player setting data 520.

The manager setting data 540 is similar to the player setting data 520 for a player. The manager setting data 540 contains a variety of setting information items for a manager. The manager setting data 540 is prepared for each of the managers appearing in the game.

The manager setting data 540 has a data structure basically similar to that of the player setting data 520. That is, the manager setting data 540 includes a manager ID that contains identification information, such as the name of the manager, manager icon data that is displayed on, for example, the screen used for registering the card of the manager, and a manager description. According to the present embodiment, since a manager character does not appear during a simulated game play, model data and texture data are not included.

The league setting data 550 includes the setting information for the league that the game player has created. The league setting data 550 is prepared for each of the created leagues. According to the present embodiment, for example, as shown in Fig. 14, the league setting data 550 includes a league ID 550a that contains identification information, such as the name of the league, a participation password 550b, regulation setting data 550c, a league participating team list 552, draft data 580, and league standings data 589.

The regulation setting data 550c contains a setting value for each of regulation items. According to the present embodiment, the regulation items include the presence/absence of a draft and YES/NO of post-draft team editing.

The league participating team list 552 contains the team identification information regarding the teams currently participating in the league in the order in which the teams are registered. At the top of the list, the team of the game player who created the league is registered.

The draft data 580 is generated when the item "Draft" of the regulation is set to "YES". The draft data 580 contains player pool data 582, draft result data 584, a pick awarded order 586, and a pick awarded team ID 588 as information regarding creation of teams for only the current league.

The player pool data 582 is used for registering baseball players to be drafted. For example, as shown in Fig. 15, the number of pools 582b is stored in association with a player ID 582a. According to the present embodiment, the same player on different teams is considered as different players. The initial value of the number of pools 582b is "1". If the baseball player is selected by any one of the game players through a draft, the number of pools 582b is set to "0". After that, the baseball player is removed from a list of the players to be drafted.

For example, as shown in Fig. 16, the draft result data 584 contains selection method setting 584b, pick awarded date and time 584c, the number of selections 584d, and a post-draft team creation data 584e in association with a team ID 584a that participates in the league.

The team ID 584a contains team identification information regarding the teams that registered participation in the league indicated by the league setting data 550 in the order in which the teams are registered. Accordingly, the team identification information regarding the team of the game player who created the league is at the top of the list.

The selection method setting 584b contains the setting information set in the selection method setting field 42 of the draft screen W16. The initial value is "Manual".

The pick awarded date and time 584c contains the date and time when a pick is awarded. The initial value is "NULL" when the draft result data 584 is generated. The difference between the date and time contained in the pick awarded date and time 584c and the current date and time indicates the time spent selecting a baseball player. Therefore, the difference between a predetermined period of time for selection and the spent time indicates the remaining selection time.

The number of selections 584d contains the number of drafted players selected for the team. The initial value is "0".

The post-draft team creation data 584e is team creation data that is used for only the current league. The basic data structure is the same as that of the original team creation data defined through the operations performed on the team creation screen W6.

The pick awarded order 586 indicates which one of an ascending order and a descending order in which the teams have registered participation in the league is selected for determining the next team that is to be awarded the pick. According to the present embodiment, the initial value is "ascending order". If the pick reaches the last team in the order, the value is changed to "descending order". Thereafter, if the pick reaches the first team in the order, the value is changed to "ascending order". This operation is repeated. In this way, the pick is awarded to each team more fairly than in the case in which only one of "ascending order" and "descending order" is employed for all rounds.

The pick awarded team ID 588 contains the identification information regarding the team currently awarded the pick in the draft. The initial value is determined by the order in which the teams have registered participation in the league. That is, the initial value is set to the team of the game player who created the league.

The league standings data 589 is generated when the league starts. The league standings data 589 contains information indicating the standings of the league.

The league registration list 551 (refer to Fig. 12) is a list containing all of the leagues created by users. The league registration list 551 contains a league ID and a participation password in association with the league ID.

The league participating team list 552 (refer to Fig. 14) serves as a data set containing information regarding the teams currently participating in each of the leagues. The league participating team list 552 is prepared for each of the leagues. For example, each of the league participating team lists 552 includes a corresponding league ID that contains the corresponding league ID and team performance associated with the participating team ID.

The team setting data item 600 is prepared for each of the users, namely, the game players. The team setting data item 600 stores information regarding the team created by the user. For example, as shown in Fig. 17, the team setting data item 600 contains a user ID 602, a password 604, a team ID 606, registered manager data 608, a registered player list 610, original team creation data 612, a participating league ID 618, a post-draft team in-use flag 630, and a post-draft additionally registered player list 632.

The registered manager data 608 contains the ID of a character assigned to a manager of the team through the manager registration process.

The registered player list 610 contains the player IDs of the baseball players that become usable when the trading cards 3 are registered.

The original team creation data 612 includes the team creation data generated by the game player using the team creation screen W6. More specifically, the original team creation data 612 contains a starting lineup list 612a, a substitute player list 612b, and a relief pitcher list 612c.

The starting lineup list 612a contains information such as the fielding positions and the positions in the batting order of the players registered in the starting lineup. For example, for each of the fielding positions, the player ID of a baseball player that plays the position and the position in the batting order of the player are contained. Since the present embodiment is described with reference to a baseball game, nine players can be registered in the starting lineup list 612a.

The substitute player list 612b contains information regarding the players registered as substitute players and setting information indicating how the substitute player is used. For example, the substitute player list 612b contains the player lDs of a predetermined number of substitute players. According to the present embodiment, eight players can be registered in the substitute player list 612b. However, this number can be changed as needed.

The relief pitcher list 612c contains the player lDs of the baseball player registered as relief pitchers and information indicating more specialized roles of the individual relief pitchers (e.g., a middle reliever or a closer) in association with each of the player lDs. According to the present embodiment, eight players can be registered in the relief pitcher list 612c. However, this number can be changed as needed.

The participating league ID 618 contains the league ID which the team is currently participating in. The post-draft team in-use flag 630 indicates whether the team is participating in the league having a regulation "Draft" of "YES" and the post-draft team creation data 584e edited through the draft screen W16 is used for the gameplay simulation. The initial value is "0", which indicates that the original team creation data 612 is used in the gameplay simulation.

The post-draft additionally registered player list 632 contains a player ID corresponding to the trading card 3 that is registered from the time the draft ended to the time the league ended.

The play data 650 is created for each of games. The play data 650 contains information regarding the game status and various information items used for controlling the game. For example, as shown in Fig. 12, the play data 650 includes (1) opposing team information 652 that contains the team lDs of two opposing teams in a game, (2) inning information 654 that contains the current inning and identification information indicating the top/bottom of the inning, (3) player parameter data 656 that contains a variety of parameters of each of the players played in the game in correspondence to the player ID, and (4) a substituted player list 658 that contains the player lDs of the players who were substituted among the substitute players and the relief pitchers.

If "Draft" is not set for the league, the initial values of the offense related ability parameter 522 and the defense related ability parameter 524 of the player setting data 520 are directly copied into the player parameter data 656 before a game starts. However, if "Draft" is set for the league, the initial values of the ability parameters of all of the baseball players registered in the post-draft team creation data 584e (refer to Fig. 16) of two opposing teams are adjusted so that the abilities are decreased and are stored in the player parameter data 656.

Thereafter, if the ability parameter of one of the baseball player is changed during a game, the value stored in the player parameter data 656 is changed as needed.

### Description of Operation

An exemplary operation performed by the server system 1100 according to the present embodiment is described next. Note that in this operation, an already registered game player has logged in using the mobile game machine 1400.

Fig. 18 is a flowchart of a main process performed by the server system 1100 according to the present embodiment.

The server processing unit 202 of the server system 1100 sends, to the mobile game machine 1400, display information used for displaying the title and the menu (step S2). If, for example, a program of the mobile game machine 1400 for displaying an image is a Web browser, the display information is in the form of HyperText Markup Language (HTML). For example, as shown in Fig. 3, the menu screen W2 is displayed. When some input operation is performed on the mobile game machine 1400, request information corresponding to the input operation is sent to the server system 1100.

If the received request information indicates that "Player Registration" is selected in order to register fielders and pitchers (YES in step S4), the server processing unit 202 references the post-draft team in-use flag 630 of the team setting data 600 of the team for "Player Registration".

If the flag is "1" ("1" in step S6), it is determined that the team is currently participating in the league having the "Draft" setting. Thus, the server processing unit 202 performs a baseball player registration process and stores information regarding a newly registered baseball player in the post-draft additionally registered player list 632 (step S8, refer to Fig. 17).

However, if the post-draft team in-use flag 630 is "0" ("0" in step S6), the server processing unit 202 performs a baseball player registration process and updates the registered player list 610 (step S10).

In the baseball player registration process, for example, as shown in Fig. 4, the server processing unit 202 sends, to the mobile game machine 1400, display information for displaying the card number entry field 10 and the software keyboard 12 for inputting the card number, a Java® program, and a CGI source used for displaying the registered player list 16 that has been registered by the game player.

The mobile game machine 1400 sends card number information in accordance with the operation input to the software keyboard 12.

The server processing unit 202 compares the received card number with the card registration data 518. When the received card number is the same as the registered information and if the card indicated by the card number is not in use, the server processing unit 202 sends information regarding a character corresponding to the card number in order to display information in the baseball player information display section 14. Thereafter, if the server processing unit 202 receives, from the mobile game machine 1400, request information corresponding to a "Register" operation input, the server processing unit 202 registers the character in the post-draft additionally registered player list 632 or the registered player list 610 of the team setting data 600 of the game player in accordance with "0"/"1" of the post-draft team in-use flag 630. In addition, the server processing unit 202 changes a flag indicating use/not-in-use of the card registration data 518 corresponding to the registered character to "in use" so that the same card is not duplicately used. Thereafter, when a "Back to menu" operation is input to the mobile game machine 1400 and if the server processing unit 202 receives, from the mobile game machine 1400, request information corresponding to the "Back to menu" operation", the server processing unit 202 completes the baseball player registration process, and the processing returns to step S2.

Similarly, if, from the received request information, it is determined that "Manager Registration" is selected in the menu screen W2 in order to register the character of a card as a manager of the team of the game player ("YES" in step S12), the server processing unit 202 performs a manager registration process as in the baseball player registration process (step S14).

The manager registration process is basically similar to the baseball player registration process except that the character corresponding to a card is a manager. However, unlike registration of a baseball player, only one manager can be registered. Accordingly, the registered manager data 608 of the team setting data 600 for the game player is updated to the ID of the newly registered manager (refer to Fig. 17).

If, from the received request information, it is determined that the menu selection icon "Team Creation" is selected in the menu screen W2 ("YES" in step S20), the server processing unit 202 references the post-draft team in-use flag 630 of the team setting data 600 for the team. If the flag is "0" ("0" in step S22), the server processing unit 202 performs a team creation process using all the baseball players registered in the registered player list 610 (step S24).

In the team creation process, the server processing unit 202 sends, to the mobile game machine 1400, display information used for displaying the team creation screen W6 (refer to Fig. 5). The team creation screen W6 includes a starting lineup assignment tag 20, a substitute player assignment tag 22, and a relief pitcher assignment tag 24 used for further displaying a dedicated assignment screen. If the mobile game machine 1400 receives an operation input for selecting one of the assignment tags or an operation input for going back to the menu screen, request information corresponding to the selection operation is sent to the server system 1100.

If, from the received request information, it is determined that the starting lineup assignment tag 20 is selected in the team creation screen W6, the server processing unit 202 performs a starting lineup assignment process. Similarly, if it is determined that the substitute player assignment tag 22 is selected, the server processing unit 202 performs a substitute player assignment process. If it is determined that the relief pitcher assignment tag 24 is selected, the server processing unit 202 performs a relief pitcher assignment process.

However, if, from the received request information, it is determined that "Back to Menu" is selected in the team creation screen W6, the server processing unit 202 completes the team creation process, and the processing proceeds to step S2.

However, if the post-draft team in-use flag 630 is "1" ("1" in step S22), the server processing unit 202 determines that the team to be created is participating in a league having draft setting of "YES". Thus, the server processing unit 202 references the setting of "Post-draft Team Creation" of the regulation setting data 550c of the league setting data 550 for the league which the team is participating in.

If the regulation item "Post-draft Team Editing" is set to "YES" ("YES" in step S26), the server processing unit 202 performs a team creation process using only the baseball players listed in the post-draft additionally registered player list 632 as baseball players to be edited (step S28). That is, only the baseball players listed in the post-draft additionally registered player list 632 are displayed in the registered player list 36 of the team creation screen W6.

However, if the regulation item "post-draft team editing" is set to "NO" ("NO" in step S26), the server processing unit 202 generates a message indicating that a change in player on the team is not allowed until the league which the team is currently participating in ends and sends the message to the mobile game machine 1400 (step S30).

If, from the received request information, it is determined that the menu selection icon "League Creation" is selected in the menu screen W2 ("YES" in step S50), the server processing unit 202 performs a league creation process (step S52).

In the league creation process, the server processing unit 202 performs a process for displaying a league setting screen first. Subsequently, the server processing unit 202 sends, to the mobile game machine 1400, display information for displaying the league creation screen W10. Thereafter, the server processing unit 202 generates new league setting data 550. At that time, all items of the regulation setting data 550c are set to predetermined default values.

If an input operation is performed on the league creation screen W10 of the mobile game machine 1400, request information including information input to the league ID setting field 60, the participation password setting field 62, and the regulation setting section 66 is sent to the server system 1100.

Upon receiving the request information including information input to the league ID setting field 60 and the participation password setting field 62, the server processing unit 202 sets the league ID 550a and the participation password 550b in the previously generated league setting data 550. In addition, upon receiving the request information including information input to the regulation setting section 66, the server processing unit 202 updates the setting of the items of the regulation setting data 550c in the previously generated league setting data 550 in accordance with the received request information.

Subsequently, if the received request information indicates an operation for completing the setting, the server processing unit 202 registers the league ID and the password of the newly created league in the league registration list 551. Thereafter, the server processing unit 202 generates a new league participating team list 552 for the league and registers the team of the game player who created the new league as a first team that participates in the league. If the received request information indicates an operation to go back to a menu screen, the server processing unit 202 completes the league creation process.

If it is determined from the request information that the menu selection icon "League Participation" in the menu screen W2 is selected (YES in step S54), the server processing unit 202 performs the league participation process (step S56).

In the league participation process, the server processing unit 202 sends, to the mobile game machine 1400, display information for displaying the league participation setting screen W12 first. The mobile game machine 1400 displays the software keyboard 74 so that the game player can input data into the league ID input field 70 and the password input field 72. Request information set in accordance with the input data is sent to the server system 1100.

If the received request information includes the league ID and the participation password, the server processing unit 202 compares these data with the league setting data 550. If matched registration in terms of the league ID 550a and the participation password 550b is not found, the server processing unit 202 sends, to the mobile game machine 1400, a message indicating that an input error occurred.

If matched registration is found, the server processing unit 202 sets the matched league ID 550a in the participating league ID 618 of the team setting data 600 for the game player. In addition, the server processing unit 202 registers and updates the information regarding the team of the game player in the league participating team list 552. Thereafter, the server processing unit 202 completes the league participation process. However, if the received request information indicates an operation for going back to the menu screen, the server processing unit 202 immediately completes the league participation process.

If, from the received request information, it is determined that the menu selection icon "Game" in the menu screen W2 is selected ("YES" in step S58), the server processing unit 202 performs a game simulation process for the team of the game player (step S60).

Fig. 19 is a flowchart illustrating the procedure of the game simulation process. In the game simulation process, the server processing unit 202 determines whether the league start condition is satisfied or not first (step S62). According to the present embodiment, if the number of teams that participate in the league reaches a predetermined value (e.g., "6"), it is determined that the league start condition is satisfied. However, the league start condition is not limited thereto. For example, the league start condition other than the above-described condition can be appropriately determined. In addition, if a maximum number of games in the league have already played, it is determined that the league start condition is not satisfied.

If the league start condition is not satisfied ("NO" in step S62), the server processing unit 202 sends, to the mobile game machine 1400, a display message indicating that the league does not start (step S64). Thereafter, the server processing unit 202 completes the game simulation process, and the processing proceeds to step S2.

However, if the league start condition is satisfied ("YES" in step S62), the server processing unit 202 references the league setting data 550 for the current league (refer to Fig. 14). If the regulation item "Draft" is set to "YES" ("YES" in step S66), the server processing unit 202 determines whether the numbers of selections 584d for all the teams have reached a predetermined value (the number of baseball players who sit on the bench) (step S68, refer to Fig. 16).

If the numbers of selections 584d for all teams have not reached the predetermined value ("NO" in step S68), it is determined that team creation only for the current league using a draft is not completed and, therefore, the server processing unit 202 performs a draft process (step S70).

Figs. 20 and 21 are flowcharts illustrating the draft process. In the draft process, the server processing unit 202 determines whether a baseball player is registered in the player pool data 582 first (step S74).

If a baseball player is not registered in the player pool data 582 ("NO" in step S74), it is determined that a draft is started for the first time. Thus, all the baseball players registered with the original team creation data 612 of all the teams that participate in the current league as a starting lineup, substitute players, and relief pitchers are registered with the player pool data 582 (step S76). Subsequently, the post-draft team in-use flag 630 of each of the teams that participate in the current league is set to "1" (step S78, refer to Fig. 17).

In addition, the team identification information on the first team that has registered for participation first is stored in the pick awarded team ID 588. Thus, a first pick is awarded to the team. Thereafter, the pick awarded date and time 584c is set to the current date and time (step S80).

Note that at that time, the selection method setting 584b of each of the teams in the draft result data 584 is set to "Manual". The number of selections 584d is set to "0", and all of the frame fields of the post-draft team creation data 584e are set to blanks. Through the processing performed in steps S74 to S80, the draft process becomes ready.

After the draft process becomes ready, the server processing unit 202 references the pick awarded team ID 588 of the league setting data 550 for the current league and determines whether the team of the game player (the team of the game player who plays on the mobile game machine 1400 that has sent the "Game" request information) is awarded a pick (step S88).

If a pick is not awarded ("NO" in step S88), the server processing unit 202 generates a display message indicating that the team is waiting for selection performed by another team and sends the display message to the mobile game machine 1400 (step S90). Thereafter, upon receiving request information indicating a "Back to menu" operation ("YES" in step S92), the processing proceeds to step S2 (refer to Fig. 18).

However, if a pick is awarded ("YES" in step S88), the server processing unit 202 generates information used for displaying the draft screen W16 and sends the information to the mobile game machine 1400 (step S96).

The mobile game machine 1400 displays the draft screen W16, and request information corresponding to one of various operations is sent to the server system 1100.

If it is determined from the received request information that a switch operation between the two player selection methods has been performed ("YES" in step S98), the server processing unit 202 switches the selection method setting 584b that is association with the team of the game player in the draft result data 584 (step S100). Note that in the mobile game machine 1400, display for the settings of the selection method setting field 42 of the draft screen W16 is controlled so that the settings are switchable.

Subsequently, if the current settings of the player selection method is "Manual" ("MANUAL" in step S102), the server processing unit 202 subtracts a difference between the pick awarded date and time 584c and the current date and time from a maximum value of a predetermined selecting time period until the server processing unit 202 receives the result of selection ("NO" in step S104). Thus, the remaining selection time is computed (step S110).

If the server processing unit 202 does not receive the result of selection from the mobile game machine 1400 before the remaining selection time becomes "0" ("YES" in step S112), the server processing unit 202 automatically selects a baseball player (step S114).

More specifically, the server processing unit 202 references the post-draft team creation data 584e and selects any one of the frame fields for a starting lineup, substitute players, and relief pitchers to which a baseball player is not assigned. Thereafter, the server processing unit 202 selects, from the player pool data 582, one of the baseball players who plays the position corresponding to the selected frame field.

However, if the server processing unit 202 has received the result of selection from the mobile game machine 1400 before the remaining time of the selecting time period becomes "0" ("NO" in step S112 and "YES" in step S104), the server processing unit 202 determines whether the fielding position of the selected baseball player matches the fielding position of the frame field to which the selected baseball player is to be assigned. If the fielding positions match ("YES" in step S120), the result of selection is applied. However, if the fielding positions do not match ("NO" in step S120), the server processing unit 202 generates a display message indicating that the selection is not accepted since the fielding positions do not match and sends the display message to the mobile game machine 1400 (step S122).

If any one of the baseball players is selected either automatically or manually, the server processing unit 202 subtracts the number of pools 582b for the selected baseball player by "1" (step S130) and registers the selected player with the post-draft team of the game player (step S132). In addition, the server processing unit 202 adds "1" to the number of selections 584d of the team of the game player (step S134). In this way, the selected baseball player is registered and, after that, the selected baseball player is not double registered.

Subsequently, the server processing unit 202 determines whether the team of the game player who has registered a baseball player is registered with the league first or last. If the team is registered first or last ("YES" in step S136), the ascending order/descending order set in the pick awarded order 586 is switched (step S138). In this way, the pick of a baseball player to be drafted is not awarded to the teams in the list in one direction and circularly, but the direction is changed for each round. Thus, the position in the registration order does not affect the fairness of the selection.

Subsequently, the server processing unit 202 selects one of the teams of the game players as the next team to be awarded the pick in accordance with the ascending or descending participation order indicated by the pick awarded order 586 and stores the identification information of the next team in the pick awarded team ID 588 (step S140). In addition, the server processing unit 202 updates the pick awarded date and time 584c to the current date and time (step S142). Thereafter, the server processing unit 202 completes the draft process.

Referring back to Fig. 19, after the draft process is completed, the processing proceeds to step S68. If, in step S68, it is determined that the number of selections 584d reaches the predetermined value ("YES" in step S68), the server processing unit 202 finally starts a process regarding the simulation of the game.

The server processing unit 202 performs a pre-process of the simulation of the game. That is, the server processing unit 202 generates the play data 650 first (step S220).

More specifically, the server processing unit 202 randomly selects, from among the other teams registered in the league participating team list 552, the opposing team and stores the identification information of the selected team in the opposing team information 652. The server processing unit 202 automatically decides which team bats first by lottery. The inning information is stored in the inning information 654. If the league does not have "draft" setting, the initial values of the offense related ability parameter 522 and the defense related ability parameter 524 of the player setting data 520 are directly copied into the player parameter data 656 before the game starts. However, if the league has "draft" setting, the initial values of the ability parameters of all of the baseball players registered in the post-draft team creation data 584e (refer to Fig. 16) of the two opposing teams are adjusted and stored so that the abilities are decreased.

Subsequently, the server processing unit 202 starts simulation of the game and starts generating game play images in accordance with the result of the simulation (step S222). Information indicating the current inning and top/bottom of the inning is stored in the play data 650 as the inning information 654. Thereafter, the server processing unit 202 starts sending, to the mobile game machine 1400, display information for displaying the game play images and game progress information (e.g., the count, on-base status, and scores) (step S224). Accordingly, the mobile game machine 1400 displays the game simulation screen W14. Thus, the game progress is displayed in the gameplay screen display section 82. The display of the scoreboard 80, the count display section 84, and the on base status display section 86 is started (refer to Fig. 11). Note that the game simulation can be performed as in widely known baseball game simulation.

In this way, the game progresses. If a game over condition is satisfied (YES in step S226), the server processing unit 202 completes generating and sending, to the mobile game machine 1400, display information for displaying the game play screens and the game progress information (step S228). In addition, the server processing unit 202 updates the league standings data 589 in accordance with the result of the game (step S230, refer to Fig. 14).

Thereafter, the server processing unit 202 determines whether a league over condition is satisfied. According to the present embodiment, if the number of games set for the league has been played, the server processing unit 202 determines that the league over condition is satisfied. However, the league over condition can be appropriately determined.

If the league over condition is satisfied ("YES" in step S240), the server processing unit 202 resets the post-draft team in-use flag 630 of each of the teams that participate in the league to "0" (step S242). In addition, the server processing unit 202 unregisters the baseball players from the post-draft additionally registered player list 632 and re-registers the baseball players with the registered player list 610 (step S244). Thereafter, the server processing unit 202 completes the game simulation process. Through the processing performed in steps S242 and S244, the restriction applied to team member assignment during league participation is removed.

As shown in Fig. 18, after the game simulation process is completed, the processing proceeds to step S2. Using the result of the game, the game player can change the team member assignment in order to strengthen his/her own team. In this way, the game player continues to enjoy management of the team.

As described above, according to the embodiment of the present invention, in a team-based game in which acquired trading cards are registered, a team is created using game characters associated with the acquired trading cards, and created teams play against each other, since the "draft" function according to the embodiment of the present invention can be employed and the game players can share the sport players corresponding to the trading cards among the game players, the game players can equally enjoy a game even when the numbers of trading cards acquired by the game players differ.

### Modifications

While the present invention has been described with reference to the first embodiment, the embodiments are not limited thereto. The game content, the components of the system, and the functions of the system can be added, removed, and modified within the spirit and scope of the present invention.

For example, while the above-described embodiment has been described with reference to a baseball game, the present invention is applicable to any team-based sports game in which teams are created using characters corresponding to trading cards and the created teams play against each other. Examples of such a game include a soccer game, a hockey game, a rugby football game, an American football game, and valley ball game. In addition, the present invention is applicable to a role playing game (RPG) in which battle groups are created and a strategy simulation game.

While the above embodiment has been described with reference to the game system including the user terminal and the server system 1100 that performs a process for managing a game, the game system may include a single stationary home game machine or a single stationary business game machine incorporating the server system 1100 and the user terminal. Alternatively, if the game system according to the present invention is used in a store, such as a gaming arcade, a business game machine may be used as the user terminal.

While the above embodiment has been described with reference to the technique in which the actions of two opposing teams are automatically controlled, only one of the defensive team and the offensive team may be computer-controlled and a game player may control the other team.

In addition, while the above embodiment has been described with reference to the "draft" function in which the game player can set the selection method (auto/manual) and, in the manual method, the game player can select one of baseball players, the selection method is not limited thereto. For example, the "draft function" can be realized by using a full-auto shuffle function. That is, in the draft process, the server processing unit 202 may generate the player pool data 582 if the league start condition is satisfied and automatically select players for all of the teams.

Furthermore, while the above embodiment has been described with reference to the configuration in which each of the players is identified by displaying the player icons 30 of the players in the draft player list 45 of the draft screen W16, the configuration is not limited thereto. For example, if identification of a predetermined number of the players is made difficult by obscuring the player icons 30 of the players with mosaic patterns, selection of the players can be made with surprise. In this way, the gameplay using the "draft function" can be made more enjoyable.

## Claims

1. A computer system for playing a game in which teams owned by game players and including a plurality of characters play against each other, comprising:
ID storage means (502, 516, 518) for storing object lDs representing lDs uniquely assigned to objects (3) corresponding to the characters;
registration receiving means (502, 220, 222, 372) for receiving a request for registering an object ID for use in a game in response to an input operation performed on a game player terminal;
registration managing means (202, 220, 222) for managing the presence/absence of registration of the object lDs for use so that registration is not allowed if an object ID received from the registration receiving means has already been registered and the registration is allowed if an object ID received from the registration receiving means has not yet been registered;
registration configuring means (202, 220, 222, 610) for causing storage means (502, 516, 612) for storing characters that form each of the teams of the game players to store, as a character of the team, a character corresponding to an object ID registered by the registration managing means;
pooling means (202, 220, 236, 550, 582) for tentatively pooling the characters that form all of the teams stored in the storage means;
team formation updating means (202, 220, 236) for re-creating each of the teams of the game players by selecting each one of the characters from among the characters pooled by the pooling means in turn; and
progress control means for updating ability parameters of the characters of the new teams of the game players to predetermined ability values set for a character having an object ID that does not require registration for use and controlling progress of a game using the new teams of the game players.

2. The computer system according to Claim 1, wherein the predetermined ability parameters for the character having an object ID that does not require registration for use are inferior to the ability parameters of a character corresponding to an object ID registered by the registration managing means.

3. The computer system according to Claim 1 or 2, wherein the team formation updating means includes a pick awarding means (202, 220, 236) for sequentially awarding a pick of one of the characters to the teams of the game players in each round while changing a picking order for each round and selecting means (202, 220, 236) for selecting one of the characters in accordance with an instruction to select the character received from the game player who owns the team that is awarded the pick by the pick awarding means.

4. The computer system according to Claim 3, further comprising:
communicating means (372) for communicating with each of game player terminals of the game players;
wherein the selecting means (202, 220, 236) selects one of the characters in accordance with a selection instruction signal transmitted from the corresponding game player terminal, and wherein if the selecting means (202, 220, 236) does not receive a selection instruction signal within a predetermined time limit, the selecting means (202, 220, 236) automatically select one of the characters for the pick.

5. The computer system according to Claim 4, further comprising:
automatic selection instruction receiving means (372, 220, 236) for receiving an automatic selection instruction signal from the game player terminal;
wherein the selecting means (202, 220, 236) automatically selects a character for the game player from which the automatic selection instruction receiving means (372, 220, 236) received the automatic selection instruction signal.

6. The computer system according to any one of Claims 3 to 5, wherein each of the characters has attributes, and a condition for the number of characters assignable to one team of a game player is defined for each of the attributes, and wherein the selecting means (202, 220, 236) includes selection disabling means (220, 236) for disabling selection of a character that does not satisfy the condition for the number of characters.

7. The computer system according to any one of Claims 1 to 6, wherein if the same character is assigned to a plurality of teams of the game players, the pooling means (202, 220, 236, 550, 582) pools the character as different characters.

8. The computer system according to any one of Claims 1 to 7, wherein the pooling means (202, 220, 236, 550, 582) and the team formation updating means (202, 220, 236) are executed after the registration configuring means (202, 220, 222, 610) has created all of the teams of the game players.

9. The computer system according to any one of Claims 1 to 8, wherein the registration configuring means includes additionally registering means (202, 220, 222, 683) for additionally assigning a character corresponding to an object ID registered for use to a new team of the game player created by the team formation updating means (202, 220, 236).

10. A program for causing a computer to play a game in which teams owned by game players and including a plurality of characters play against each other, comprising:
program code for causing the computer to function as ID storage means for storing object lDs representing lDs uniquely assigned to objects corresponding to the characters, registration receiving means for receiving a request for registering an object ID for use in a game in response to an input operation performed on a game player terminal, registration managing means for managing the presence/absence of registration of the object IDs for use so that registration is not allowed if an object ID received from the registration receiving means has already been registered and the registration is allowed if an object ID received from the registration receiving means has not yet been registered, registration configuring means for causing storage means for storing characters that form each of the teams of the game players to store, as a character of the team, a character corresponding to an object ID registered by the registration managing means, pooling means for tentatively pooling the characters that form all of the teams stored in the storage means, team formation updating means for re-creating each of the teams of the game players by selecting each one of the characters from among the characters pooled by the pooling means in turn, and progress control means for updating ability parameters of the characters of the new teams of the game players to predetermined ability values set for a character having an object ID that does not require registration for use and controlling progress of a game using the new teams of the game players.
